(19) **Europäisches Patentamt European Patent Office Office européen des brevets**

(11) **EP 4 707 830 A1**

(12) **EUROPEAN PATENT APPLICATION**
published in accordance with Art. 153(4) EPC

(43) Date of publication:
**11.03.2026 Bulletin 2026/11**

(21) Application number: **24900972.1**

(22) Date of filing: **28.11.2024**

(51) International Patent Classification (IPC):
*G01R 31/389* (2019.01)    *G01R 31/392* (2019.01)
*G01R 23/16* (2006.01)    *G01R 31/367* (2019.01)
*G01R 31/396* (2019.01)    *H01M 4/36* (2006.01)

(52) Cooperative Patent Classification (CPC):
**G01R 23/16; G01R 31/367; G01R 31/389;
G01R 31/392; G01R 31/396; H01M 4/36;
Y02E 60/10**

(86) International application number:
**PCT/KR2024/019134**

(87) International publication number:
**WO 2025/121786 (12.06.2025 Gazette 2025/24)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:    **06.12.2023    KR 20230175871
13.11.2024    KR 20240160878**

(71) Applicant: **LG Energy Solution, Ltd.
Seoul 07335 (KR)**

(72) Inventors:
• **KYUNG, Wonshik
Daejeon 34122 (KR)**
• **LEE, Eun Ju
Daejeon 34122 (KR)**
• **RAH, Kyun Il
Daejeon 34122 (KR)**
• **BAEK, Sora
Daejeon 34122 (KR)**
• **CHO, Hyeonjin
Daejeon 34122 (KR)**

(74) Representative: **Hoffmann Eitle
Patent- und Rechtsanwälte PartmbB
Arabellastraße 30
81925 München (DE)**

(54) **POSITIVE ELECTRODE, LITHIUM SECONDARY BATTERY COMPRISING SAME, AND METHOD FOR MANUFACTURING POSITIVE ELECTRODE**

(57)    The present invention relates to a positive electrode comprising a positive electrode active material, wherein a resistance component ratio, as defined by equation 1 below, is 2 or more. [Equation 1] $R_{ct} / R_s$. In the equation, $R_{ct}$ means a charge transfer resistance of the positive electrode, which is measured in a first frequency range for a secondary battery comprising the positive electrode, $R_s$ means a surface or interface resistance of the positive electrode, which is measured in a second frequency range for the secondary battery comprising the positive electrode, the first frequency range is from 1 Hz to 1 kHz, and the second frequency range is from more than 1 kHz to 1,000 kHz.

FIG. 2

EP 4 707 830 A1

## Description

### Technical Field

The present disclosure relates to a positive electrode, a lithium secondary battery comprising the same and a method for preparing the positive electrode.

### Background Art

Recently, the rapid spread of electronic devices that use batteries, such as mobile phones, laptops, computers, and electric vehicles has led to a rapidly growing demand for small, lightweight, and relatively high-capacity secondary batteries. In particular, lithium secondary batteries are gaining traction as a driving power source for portable devices due to their lightweight and high energy density. Accordingly, research and development efforts are actively underway to improve the performance of the lithium secondary batteries.

Carbon-based materials such as graphite have been mainly used as negative electrode materials for the lithium secondary batteries, but the carbon-based materials have a low capacity per unit mass, which makes it difficult to achieve high capacity in the lithium secondary batteries. Accordingly, silicon-based compounds, non-carbon-based negative electrode materials that exhibit higher capacity compared to the carbon-based materials, have been developed and used as the negative electrode materials. However, in a case where the silicon-based compounds are overused, sudden deterioration may occur, or the lithium secondary batteries using the same may experience an unexpected problem with reduced life at temperatures below room temperature.

As one of the methods of measuring the performance or the state of the lithium secondary batteries, previously, a method of measuring resistance or battery capacity using hybrid pulse power characterization (HPPC) has been mainly used. However, although the above method makes it possible to evaluate the performance of the lithium secondary batteries, the method has limitations in making a specific diagnosis by individually identifying the state of a positive electrode and/or a negative electrode as components of the lithium secondary batteries.

Therefore, there is a need for a method to improve the performance and the life of the lithium secondary batteries by identifying and controlling a performance factor of the positive electrode and/or the negative electrode, which are the components thereof, as a factor that affect the performance and the life of the lithium secondary batteries.

### Detailed Description of the Invention

#### Technical Goals

The present disclosure is designed to address the problem described above and thus to provide a positive electrode in a lithium secondary battery with improved life and/or performance by indirectly controlling an amount of reaction of a negative electrode by adjusting a reaction resistance of the positive electrode, one of components of the lithium secondary battery.

In addition, the present disclosure is directed to providing a lithium secondary battery with improved life and/or performance by extracting and analyzing a resistance component directly related to deterioration of the lithium secondary battery using an electrochemical impedance spectroscopy (EIS), a non-destructive measurement method.

#### Technical solutions

The present disclosure provides a positive electrode including a positive electrode active material and having a resistance component ratio defined by Equation 1 below of greater than or equal to 2.

$$[\text{Equation 1}]$$

$$R_{ct} / R_s$$

In Equation 1 above, the $R_{ct}$ refers to a charge transfer resistance of the positive electrode measured in a first frequency domain for a secondary battery including the positive electrode, and the $R_s$ refers to a surface or interfacial resistance of the positive electrode measured in a second frequency domain for the secondary battery including the positive electrode, and the first frequency domain is a frequency domain of greater than or equal to 1 hertz (Hz) and less than or equal to 1 kilohertz (kHz), and the second frequency domain is a frequency domain of greater than 1 kHz and less than or equal to 1,000 kHz.

In an example embodiment, the $R_{ct}$ may be determined based on a value obtained by performing a distribution of relaxation time (DRT) analysis on impedance information obtained by performing an electrochemical impedance spectroscopy (EIS) on the secondary battery to generate a graph of impedance based on frequency and integrating a first domain corresponding to the first frequency domain of the graph, and the $R_s$ may be determined based on a value obtained by performing the DRT analysis on impedance information obtained by performing the EIS on the secondary battery to generate the graph of impedance based on frequency and integrating a second domain corresponding to the second frequency domain of the graph.

In an example embodiment, the positive electrode active material may include a first positive electrode active material and a second positive electrode active material having different average particle diameters ($D_{50}$) from each other.

In an example embodiment, the positive electrode active material may include a first positive electrode active material represented by Formula 1 below and a second positive electrode active material represented by Formula 2 below.

$$[\text{Formula 1}] \qquad Li_{1+a1}Ni_{x1}Co_{y1}Mn_{z1}Al_{w1}M^1{}_{v1}O_2$$

In Formula 1 above,

$0 \le a1 \le 0.3$, $0.6 \le x1 \le 1.0$, $0 \le y1 \le 0.2$, $0 \le z1 \le 0.2$, $0 \le w1 \le 0.2$, $0 \le v1 \le 0.1$, and
$M^1$ is a doping element including at least one selected from the group consisting of W, Cu, Fe, V, Cr, Ti, Zr, Zn, In, Ta, Y, In, La, Sr, Ga, Sc, Gd, Sm, Ca, Ce, Nb, Mg, B, Ba and Mo, and

$$[\text{Formula 2}] \qquad Li_{1+a2}Ni_{x2}Co_{y2}Mn_{z2}Al_{w2}M^2{}_{v2}O2$$

in Formula 2 above,
$0 \le a2 \le 0.3$, $0.6 \le x2 \le 1.0$, $0 \le y2 \le 0.2$, $0 \le z2 \le 0.2$, $0 \le w2 \le 0.2$, $0 \le v2 \le 0.1$, and
$M^2$ is a doping element including at least one selected from the group consisting of W, Cu, Fe, V, Cr, Ti, Zr, Zn, In, Ta, Y, In, La, Sr, Ga, Sc, Gd, Sm, Ca, Ce, Nb, Mg, B, Ba and Mo.

In an example embodiment, an average particle diameter ($D_{50}$) of the first positive electrode active material may be 6 micrometers ($\mu$m) to 12 $\mu$m.

In an example embodiment, an average particle diameter ($D_{50}$) of the second positive electrode active material may be 1.5 $\mu$m to 5 $\mu$m.

In an example embodiment, the first positive electrode active material and the second positive electrode active material may be included in a weight ratio of 80:20 to 40:60.

In an example embodiment, the positive electrode active material may be obtained as the positive electrode active material is mixed in distilled water, washed with water, and then dried.

In addition, the present disclosure provides a lithium secondary battery including a positive electrode active material and having a resistance component ratio defined by Equation 1 below of greater than or equal to 2.

$$[\text{Equation 1}]$$

$$R_{ct} / R_s$$

In Equation 1 above, the $R_{ct}$ refers to a charge transfer resistance of the positive electrode measured in a first frequency domain for the lithium secondary battery, and the $R_s$ refers to a surface or interfacial resistance of the positive electrode measured in a second frequency domain for the lithium secondary battery. The first frequency domain is a frequency domain of greater than or equal to 1 hertz (Hz) and less than or equal to 1 kilohertz (kHz) and, the second frequency domain is a frequency domain of greater than 1 kHz and less than or equal to 1,000 kHz.

In an example embodiment, the $R_{ct}$ may be determined based on a value obtained by performing a distribution of relaxation time (DRT) analysis on impedance information obtained by performing an electrochemical impedance spectroscopy (EIS) on the lithium secondary battery to generate a graph of impedance based on frequency and integrating a first domain corresponding to the first frequency domain of the graph, and the $R_s$ may be determined based on a value obtained by performing the DRT analysis on impedance information obtained by performing the EIS on the secondary battery to generate the graph of impedance based on frequency and integrating a second domain corresponding to the second frequency domain of the graph.

In an example embodiment, the negative electrode may include a negative electrode current collector and a negative electrode active material layer including a negative electrode active material, and the negative electrode active material may include at least one of a silicon-based negative electrode active material and a carbon-based negative electrode active material.

In an example embodiment, the silicon-based negative electrode active material may be included in an amount of 1 weight percentage (wt%) to 30 wt% with respect to a total weight of the negative electrode active material layer.

In an example embodiment, the negative electrode may include the silicon-based negative electrode active material and the carbon-based negative electrode active material, and the silicon-based negative electrode active material and the carbon-based negative electrode active material may be included in a weight ratio of 1:99 to 30:70.

In addition, the present disclosure provides a method of preparing a positive electrode, the method including (A) mixing a positive electrode active material in distilled water and washing the positive electrode active material with water, (B) drying the washed positive electrode active material, and (C) applying a positive electrode slurry including the dried positive electrode active material onto a positive electrode current collector.

In an example embodiment, the operation (A) may include (a1) mixing a first positive electrode active material in distilled water and performing a first water washing and (a2) mixing a second positive electrode active material in distilled water and performing a second water washing, and the first positive electrode active material and the second positive electrode active material may have different average particle diameters ($D_{50}$) from each other.

In an example embodiment, the first water washing may be performed at a higher temperature than the second water washing.

In an example embodiment, the first water washing may be performed at 20 degrees Celsius (°C) to 40°C.

In an example embodiment, the second water washing may be performed at 3°C to 18°C.

In an example embodiment, the first water washing may be performed by mixing the first positive electrode active material in an amount of 50 wt% to 70 wt% with respect to a total weight of the distilled water.

In an example embodiment, the second water washing may be performed by mixing the second positive electrode active material in an amount of 65 wt% to 85 wt% with respect to a total weight of the distilled water.

## Effects of the Invention

According to the example embodiments, it is possible to provide a lithium secondary battery with improved life and/or performance by identifying and extracting a performance factor of the lithium secondary battery and analyzing and adjusting the performance factor of the lithium secondary battery.

According to the example embodiment, it is possible to extract and analyze the resistance characteristic of a positive electrode and/or a negative electrode related to the deterioration of the lithium secondary battery with a result obtained as a graph of impedance based on frequency by using an electrochemical impedance spectroscopy (EIS), a non-destructive measurement method, and performing a distribution of relaxation time (DRT) analysis, and thus it is possible to improve the performance and/or the life characteristic of the lithium secondary battery without affecting the components and performance of the lithium secondary battery.

In particular, among the performance factors of the lithium secondary battery, a state of the positive electrode and/or the negative electrode may be individually analyzed and specifically diagnosed, and thus, by indirectly controlling the amount of reaction of the negative electrode by adjusting a resistance characteristic parameter of the positive electrode, the performance and the life characteristic of the lithium secondary battery prepared including the above positive electrode may be improved.

## Brief Description of Drawings

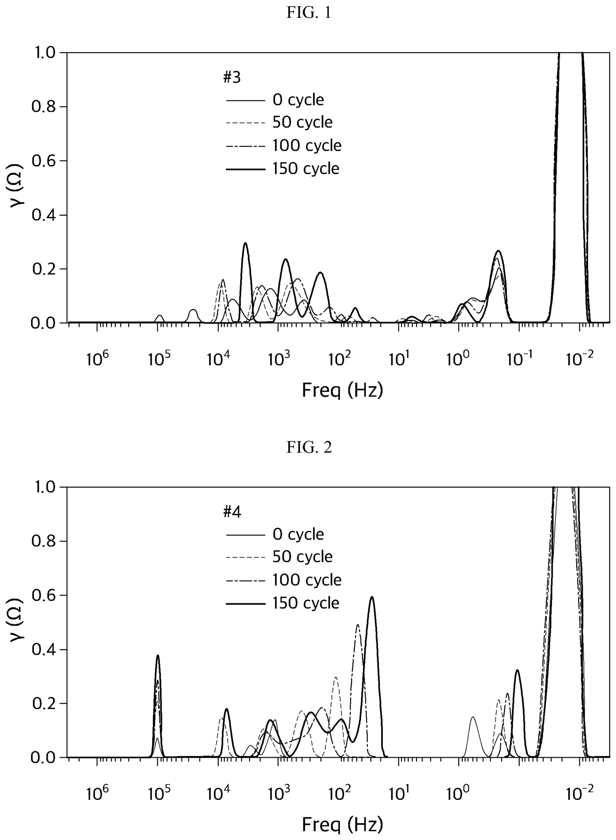

FIG. 1 shows a graph of impedance based on frequency of a positive electrode of Example 1 according to Experimental Example 1 of the present disclosure.

FIG. 2 shows a graph of impedance based on frequency of a positive electrode of Comparative Example 1 according to Experimental Example 1 of the present disclosure.

FIG. 3 shows a graph of impedance based on frequency of a positive electrode of Comparative Example 2 according to Experimental Example 1 of the present disclosure.

FIG. 4 shows a result of evaluating a room temperature life characteristic of a lithium secondary battery of Example 1 and Comparative Examples 1 and 2 according to Experimental Example 2 of the present disclosure.

## Mode for Carrying Out the Invention

Terms or words used in this specification and claims is not to be construed as limited to their common or dictionary meanings, and it is to be interpreted as meaning and concept consistent with the technical idea of the present disclosure based on the principle that the inventor may appropriately define the concept of terms in order to explain his or her invention in the best way.

Therefore, it is understood that the configuration of an embodiment described in this specification is one of the most desired embodiments of the present disclosure and does not represent the entire technical idea of the present disclosure, so various equivalents and modification examples that may replace the embodiments at the time of filing the present application may exist. In this specification, singular expressions include plural expressions unless the context clearly indicates otherwise.

In this specification, if a part "includes" a certain element, it means that the part may further include other elements rather than excluding other elements, unless specifically stated to the contrary. Thus, for example, a composition including compound A may include other compounds other than A. However, in certain embodiments, the term "including" also encompasses more limited meanings of "consisting essentially/inherently of" and "consisting of," and for example, "a composition including compound A" may also consist (essentially/inherently) of compound A.

In connection with this, as described in this specification, it is to be understood that terms such as "being provided with" or "having" are intended to designate the presence of implemented features, numbers, operations, components, or combinations thereof, but not exclude in advance the possibility of the presence or addition of one or more other features, numbers, operations, components, or combinations thereof.

In this specification, if an arbitrary layer is located "on" or "between" another arbitrary layer, not only a case where such layer is in contact with another layer, but also a case where another layer or substance exists between the two layers are included.

If amounts, concentrations, or other values or parameters are given as listings of ranges, desirable ranges, desirable upper limits and desirable lower limits in this specification, it is to be understood that all ranges that may be formed from any pair of any upper range limits or desirable values and any lower range limits or desirable values are specifically disclosed, regardless of whether the range is separately disclosed. If a range of numeric values is referred to in this specification, unless otherwise stated, for example, unless there is a limited term such as greater than and less than, the range is intended to include the endpoint values and all integers and fractions within the range. The scope of the present disclosure is not intended to be limited to the specific values referred to when defining a range.

Among the physical properties referred to in this specification, in cases where the measurement temperature affects the relevant physical properties, unless otherwise specified, the physical properties are measured at room temperature. The term room temperature is a natural temperature that is not heated or reduced, and may mean, for example, any temperature in a range of about 10 degrees Celsius (°C) to 30°C, about 23°C, or about 25°C. In addition, unless otherwise specified, a unit of temperature in this specification is °C.

In addition, among the physical properties referred to in this specification, in cases where the measurement pressure affects the relevant physical properties, unless otherwise specified, the physical properties are measured at normal pressure, that is, atmospheric pressure (about 1 atm).

In this specification, "a single particle type particle" refers to a particle consisting of less than or equal to 30 nodules and is a concept that comprises a single particle and a pseudo-single particle. The "single particle" refers to a particle consisting of one single nodule, and the "pseudo-single particle" refers to a particle, a composite formed of less than or equal to 30 nodules.

In this specification, the "nodule" refers to a particle unit body constituting the single particle and the pseudo-single particle, and the nodule may be a single crystal lacking a crystalline grain boundary, or a polycrystalline that has no apparent grain boundaries when observed at a field of view of 5,000 to 20,000 times using a scanning electron microscope (SEM).

As used herein, the expression "particle" may comprise at least one of the single particle, the pseudo-single particle, a primary particle, the nodule, and a secondary particle, two or more, or all of these.

In this specification, "an average particle diameter $D_{50}$" refers to a particle size based on 50 percent (%) of the volume cumulative particle size distribution of positive electrode active material powder, and may be measured using a laser diffraction method. For example, as the positive electrode active material powder is dispersed in a dispersion medium, introduced into a commercially available laser diffraction particle size measurement device (for example, Microtrac MT 3000), irradiated with ultrasonic waves of about 28 kilohertz (kHz) with an output of 60 watt (W) to obtain a graph of volume cumulative particle size distribution, and then a particle size corresponding to 50% of the volumetric accumulation is determined, the average particle diameter $D_{50}$ may be measured.

The present disclosure relates to a positive electrode.

The positive electrode may include a positive electrode active material and have a resistance component ratio defined by Equation 1 below of greater than or equal to 2.

$$[\text{Equation 1}]$$

$$R_{ct} / R_s$$

The $R_{ct}$ may refer to a charge transfer resistance of the positive electrode measured in a first frequency domain for a secondary battery including the positive electrode.

The $R_s$ may refer to a surface or interfacial resistance of the positive electrode measured in a second frequency domain for the secondary battery including the positive electrode.

The first frequency domain may be a frequency domain of greater than or equal to 1 hertz (Hz) and less than or equal to 1 kilohertz (kHz).

The second frequency domain may be a frequency domain of greater than 1 kHz and less than or equal to 1,000 kHz.

The $R_{ct}$ may be determined based on a value obtained by performing a distribution of relaxation time (DRT) analysis on impedance information obtained by performing an electrochemical impedance spectroscopy (EIS) on the secondary battery to generate a graph of impedance based on frequency and integrating a first domain corresponding to the first frequency domain of the graph.

The $R_s$ may be determined based on a value obtained by performing the DRT analysis on impedance information obtained by performing the EIS on the secondary battery to generate the graph of impedance based on frequency and integrating a second domain corresponding to the second frequency domain of the graph.

Previously, hybrid pulse power characterization (HPPC) was used to evaluate a state of a lithium secondary battery, so it was only possible to evaluate the performance of the battery, but it was difficult to analyze each specific component. However, according to the present disclosure, through an analysis method completed using the electrochemical impedance analysis (EIS) and the distribution of relaxation time (DRT) analysis, resistance factors of individual components (for example, a positive electrode and/or a negative electrode) of the battery, components having a major impact on the performance, were analyzed and a state of the individual components (for example, a positive electrode and/or a negative electrode) was evaluated therefrom, and thus finally the performance of the lithium secondary battery might be improved.

A value of the resistance component ratio $R_{ct} / R_s$ represented by Equation 1 above may be greater than or equal to 2, specifically greater than or equal to 2 and less than or equal to 8, and more specifically greater than or equal to 2 and less than or equal to 6. As described above, when the value of the resistance component ratio $R_{ct} / R_s$ is greater than or equal to 2, a life characteristic of the lithium secondary battery may be improved. In particular, when the value of the resistance component ratio $R_{ct} / R_s$ is greater than or equal to 2, a room temperature life characteristic may be improved in the lithium secondary battery with a silicon-based and graphite mixed negative electrode applied.

When the value of the resistive component ratio $R_{ct} / R_s$ is less than 2, a steep decrease in charge/discharge capacity may occur due to rapid deterioration of a SiO / graphite negative electrode as a cycle progresses, and when the value of $R_{ct} / R_s$ is greater than 8, a capacity decrease may occur due to a fast charging performance decrease and/or a resistance increase.

A resistance component of $R_{ct}$ and/or $R_s$ increases in a value depending on the number of cycles of the lithium secondary battery, but regardless of changes in the number of cycles, the value of the resistance component ratio $R_{ct} / R_s$ may satisfy the range.

For example, the value of $R_{ct} / R_s$ measured after 200 cycles of the lithium secondary battery may satisfy the range of greater than or equal to 2 and may satisfy, for example, a range of 2 to 8 or a range of 2 to 6.

In an example embodiment of the present disclosure, specifically, by adjusting a ratio of a charge transfer resistance value of the positive electrode to a resistance value at the surface or interface of the positive electrode, an amount of reaction at the negative electrode may be indirectly adjusted, and thus the battery may be prevented from deteriorating and performance including the life characteristic of the lithium secondary battery may be improved.

The resistance component ratio $R_{ct} / R_s$ may be adjusted according to a type of material included in the positive electrode, a content ratio of the material, and/or a preparing condition. Specifically, the resistance component ratio may be adjusted depending on a transition metal composition of the positive electrode active material included in the positive electrode, a type of doping element, an average particle size of the positive electrode active material, a calcination condition or a water-washing condition during preparing, and when different types of the positive electrode active materials are included in the positive electrode, may vary depending on a mixing ratio therebetween. In addition, the resistance component ratio may be adjusted depending on a type of conductive material and a type of binder included in the positive electrode and may be adjusted according to a mixing ratio of the positive electrode active material, the conductive material, and the binder, the thickness of a positive electrode active material layer, and the preparing condition of the positive electrode. Rather than uniformly defining a condition for adjusting the resistance component ratio to a predetermined level, the resistance component ratio may be easily adjusted to a ratio to be achieved by referring to Examples and Comparative Examples of the present disclosure.

The positive electrode active material may include a first positive electrode active material and a second positive electrode active material having different average particle diameters ($D_{50}$) from each other.

An average particle diameter ($D_{50}$) of the first positive electrode active material may be greater than an average particle diameter ($D_{50}$) of the second positive electrode active material.

The positive electrode active material may include a first positive electrode active material represented by Formula 1 below, and a second positive electrode active material represented by Formula 2 below.

[Formula 1]   $Li_{1+ai}Ni_{x1}Co_{y1}Mn_{z1}Al_{w1}M^1{}_{v1}O_2$

In Formula 1 above,

$0 \leq a1 \leq 0.3$, $0.6 \leq x1 \leq 1.0$, $0 \leq y1 \leq 0.2$, $0 \leq z1 \leq 0.2$, $0 \leq w1 \leq 0.2$, $0 \leq v1 \leq 0.1$, and
$M^1$ is a doping element including at least one selected from the group consisting of W, Cu, Fe, V, Cr, Ti, Zr, Zn, In, Ta, Y, In, La, Sr, Ga, Sc, Gd, Sm, Ca, Ce, Nb, Mg, B, Ba and Mo.

[Formula 2]   $Li_{1+a2}Ni_{x2}Co_{y2}Mn_{z2}Al_{w2}M^2{}_{v2}O_2$

In Formula 2 above,

$0 \leq a2 \leq 0.3$, $0.6 \leq x2 \leq 1.0$, $0 \leq y2 \leq 0.2$, $0 \leq z2 \leq 0.2$, $0 \leq w2 \leq 0.2$, $0 \leq v2 \leq 0.1$, and
$M^2$ is a doping element including at least one selected from the group consisting of W, Cu, Fe, V, Cr, Ti, Zr, Zn, In, Ta, Y, In, La, Sr, Ga, Sc, Gd, Sm, Ca, Ce, Nb, Mg, B, Ba and Mo.

The first positive electrode active material may include a ternary lithium transition metal oxide including nickel (Ni), cobalt (Co), and manganese (Mn). In addition, the first positive electrode active material may further include an element such as aluminum (Al) in addition to nickel, cobalt, and manganese, and may include a quaternary lithium transition metal oxide. In addition, the first positive electrode active material may include $M^1$ as a doping element other than aluminum (Al) or may include $M^1$ as a doping element along with aluminum (Al).

In a case where the first positive electrode active material including the ternary lithium transition metal oxide further includes the doping element such as aluminum (Al) and/or $M^1$, the first positive electrode active material may have structural stability or electrochemical stability, and thus stability and/or a capacity characteristic may be improved at high potentials by suppressing cation mixing during charging and discharging.

In Formula 1 above, the $M^1$ may be, for example, one or more types of doping elements selected from the group consisting of W, Y, Ba, Ca, Ti, Mg, Ta, and Nb.

The $1+a1$ may refer to a molar ratio of lithium (Li) in the first positive electrode active material of Formula 1 above and may be $0 \leq a1 \leq 0.3$, preferably $0 \leq a1 \leq 0.2$, more preferably $0 \leq a1 \leq 0.15$, even more preferably $0 \leq a1 \leq 0.1$. When the a1 is less than 0, there is a risk that capacity may decrease, and when the a1 is greater than 0.3, particles may be sintered during a calcination process, making it difficult to prepare the first positive electrode active material. Accordingly, when the range is satisfied, a balance may be achieved between a remarkable effect of improving a capacity characteristic of the first positive electrode active material by controlling a Li content and/or sinterability when preparing the first positive electrode active material.

The x1 may refer to a molar ratio of nickel among all metals excluding lithium in the first positive electrode active material and may be $0.6 \leq x1 \leq 1.0$, preferably $0.7 \leq x1 \leq 1.0$, more preferably $0.8 \leq x1 \leq 1.0$, or $0.9 \leq x1 \leq 1.0$. In addition, the x1 may specifically be $0.6 \leq x1 < 1.0$, and more specifically, may be $0.7 \leq x1 < 1.0$ or $0.8 \leq x1 < 1.0$, $0.85 \leq x1 < 1.0$, or $0.9 \leq x1 < 1.0$. When the range is satisfied, a sufficient nickel content to contribute to charging and discharging may be secured in the first positive electrode active material, and thus high capacity may be achieved.

The y1 may refer to a molar ratio of cobalt (Co) among all metals excluding lithium in the first positive electrode active material and may be $0 \leq y1 \leq 0.2$, preferably $0 \leq y1 \leq 0.18$, more preferably $0.01 \leq y1 \leq 0.15$, even more preferably $0.03 \leq y1 \leq 0.12$, even more preferably $0.05 \leq y1 \leq 0.10$. Alternatively, the molar ratio may be $0 < y1 \leq 0.2$, specifically $0 < y1 \leq 0.18$, or $0 < y1 \leq 0.15$. When the y1 satisfies the range, a good resistance characteristic and an output characteristic may be implemented while having a cost advantage by including a small amount of cobalt.

The z1 may refer to a molar ratio of manganese (Mn) among all metals excluding lithium in the first positive electrode active material and may be $0 \leq z1 \leq 0.2$, preferably $0 \leq z1 \leq 0.18$, more preferably $0.01 \leq z1 \leq 0.15$, even more preferably $0.03 \leq z1 \leq 0.10$. Alternatively, the molar ratio may be $0 < z1 \leq 0.2$, specifically $0 < z1 \leq 0.18$, or $0 < z1 \leq 0.15$. When the z1 satisfies the range, the structural stability of the first positive electrode active material may be improved.

The w1 may refer to a molar ratio of aluminum (Al) among all metals excluding lithium in the first positive electrode active material and may be $0 \leq w1 \leq 0.2$, preferably $0 \leq w1 \leq 0.18$, more preferably $0.01 \leq w1 \leq 0.15$, eve more preferably $0.03 \leq w1 \leq 0.10$. Alternatively, the molar ratio may be $0 < w1 \leq 0.2$, specifically $0 < w1 \leq 0.18$, or $0 < w1 \leq 0.15$. When the range is satisfied, the thermal stability of the first positive electrode active material may be improved due to a high binding force with oxygen.

The v1 may refer to a molar ratio of $M^1$ among all metals excluding lithium in the first positive electrode active material and may be $0 \leq v1 \leq 0.1$, preferably $0 \leq v1 \leq 0.08$, more preferably $0 \leq v1 \leq 0.05$.

In Formula 2 above, the $M^2$ may be, for example, one or more types of doping elements selected from the group consisting of W, Y, Ba, Ca, Ti, Mg, Ta, and Nb.

The 1+a2 may refer to a molar ratio of lithium (Li) in the second positive electrode active material of Formula 2 above and may be $0 \leq a2 \leq 0.3$, preferably $0 \leq a2 \leq 0.2$, more preferably $0 \leq a2 \leq 0.15$, even more preferably $0 \leq a2 \leq 0.1$. When the a2 is less than 0, there is a risk that capacity may decrease, and when the a2 is greater than 0.3, particles may be sintered during a calcination process, making it difficult to prepare the second positive electrode active material. Accordingly, when the range is satisfied, a balance may be achieved between a remarkable effect of improving a capacity characteristic of the second positive electrode active material by controlling a Li content and/or sinterability when preparing the second positive electrode active material.

The x2 may refer to a molar ratio of nickel (Ni) among all metals excluding lithium in the second positive electrode active material and may be $0.6 \leq x2 \leq 1.0$, preferably $0.7 \leq x2 \leq 1.0$, more preferably $0.8 \leq x2 \leq 1.0$, or $0.9 \leq x2 \leq 1.0$. In addition, the x2 may specifically be $0.6 \leq x2 < 1.0$, and more specifically, may be $0.7 \leq x2 < 1.0$, or $0.8 \leq x2 < 1.0$, $0.85 \leq x2 < 1.0$, or $0.9 \leq x2 < 1.0$. When the range is satisfied, a sufficient nickel content to contribute to charging and discharging may be secured in the second positive electrode active material, and thus high capacity may be achieved.

The y2 may refer to a molar ratio of cobalt (Co) among all metals excluding lithium in the second positive electrode active material and may be $0 \leq y2 \leq 0.2$, preferably $0 \leq y2 \leq 0.18$, more preferably $0.01 \leq y2 \leq 0.15$, even more preferably $0.03 \leq y2 \leq 0.12$, and even more preferably $0.05 \leq y2 \leq 0.10$. Alternatively, the molar ratio may be $0 < y2 \leq 0.2$, specifically $0 < y2 \leq 0.18$, or $0 < y2 \leq 0.15$. When the y2 satisfies the range, a good resistance characteristic and an output characteristic may be implemented while having a cost advantage by including a small amount of cobalt.

The z2 may refer to a molar ratio of manganese (Mn) among all metals excluding lithium in the second positive electrode active material and may be $0 \leq z2 \leq 0.2$, preferably $0 \leq z2 \leq 0.18$, more preferably $0.01 \leq z2 \leq 0.15$, even more preferably $0.03 \leq z2 \leq 0.10$. Alternatively, the molar ratio may be $0 < z2 \leq 0.2$, specifically $0 < z2 \leq 0.18$, or $0 < z2 \leq 0.15$. When the z2 satisfies the range, the structural stability of the second positive electrode active material may be improved.

The w2 may refer to a molar ratio of aluminum (Al) among all metals excluding lithium in the second positive electrode active material, and may be $0 \leq w2 \leq 0.2$, preferably $0 \leq w2 \leq 0.18$, more preferably $0.01 \leq w2 \leq 0.15$, even more preferably $0.03 \leq wl \leq 0.10$. Alternatively, the molar ratio may be $0 < w2 \leq 0.2$, specifically $0 < w2 \leq 0.18$, or $0 < w2 \leq 0.15$. When the range is satisfied, the thermal stability of the second positive electrode active material may be improved due to a high binding force with oxygen.

The v2 may refer to a molar ratio of $M^2$ among all metals excluding lithium in the second positive electrode active material and may be $0 \leq v2 \leq 0.1$, preferably $0 \leq v2 \leq 0.08$, more preferably $0 \leq v2 \leq 0.05$.

The first positive electrode active material may be selected to have an average particle diameter ($D_{50}$) larger than that of the second positive electrode active material. Accordingly, during electrode rolling, the second positive electrode active material with a small particle size is filled in a pore of the first positive electrode active material with a large particle size, such that electrode density may be increased and high energy density may be implemented, and thus a high capacity characteristic may be achieved. Furthermore, in a case where two types of the positive electrode active materials with different average particle diameters from each other are used as described above, the value of $R_{ct} / R_s$ may be satisfied, and thus the performance and/or the life of the lithium secondary battery may be improved.

For example, the average particle diameter ($D_{50}$) of the first positive electrode active material may be 6 micrometers ($\mu$m) to 12 $\mu$m, and the average particle diameter ($D_{50}$) of the second positive electrode active material may be 1.5 $\mu$m to 5 $\mu$m.

Specifically, the average particle diameter of the first positive electrode active material may be 6 $\mu$m or more, 6.2 $\mu$m or more, 6.4 $\mu$m or more, 6.6 $\mu$m or more, 6.8 $\mu$m or more, 7 $\mu$m or more, 7.2 $\mu$m or more, 7.4 $\mu$m or more, 7.6 $\mu$m or more, 7.8 $\mu$m or more, 8 $\mu$m or more, 8.2 $\mu$m or more, 8.4 $\mu$m or more and may be 12 $\mu$m or less, 11.8 $\mu$m or less, 11.6 $\mu$m or less, 11.4 $\mu$m or less, 11.2 $\mu$m or less, 11 $\mu$m or less, 10.8 $\mu$m or less, 10.6 $\mu$m or less, 10.4 $\mu$m or less, 10.2 $\mu$m or less, 10 $\mu$m or less, 9.8 $\mu$m or less, 9.6 $\mu$m or less, 9.4 $\mu$m or less, 9.2 $\mu$m or less, 9 $\mu$m or less, 8.8 $\mu$m or less, 8.6 $\mu$m or less. For example, the average particle diameter of the first positive electrode active material may be 6 $\mu$m to 12 $\mu$m, preferably 7.4 $\mu$m to 11 $\mu$n, more preferably 8 $\mu$m to 9.6 $\mu$m, even more preferably 8.2 $\mu$m to 9 $\mu$m. When the range is satisfied, the rolling density of the positive electrode active material may be increased, and thus electrode density may be improved during electrode preparation, and thus excellent energy density may be implemented.

Specifically, the average particle diameter of the second positive electrode active material may be 1.5 $\mu$m or more, 1.7 $\mu$m or more, 1.9 $\mu$m or more, 2 $\mu$m or more, 2.2 $\mu$m or more, 2.4 $\mu$m or more, 2.6 $\mu$m or more, 2.8 $\mu$m or more, 3 $\mu$m or more and may be 5 $\mu$m or less, 4.8 $\mu$m or less, 4.6 $\mu$m or less, 4.4 $\mu$m or less, 4.2 $\mu$m or less, 4 $\mu$m or less, 3.8 $\mu$m or less, 3.6 $\mu$m or less, 3.4 $\mu$m or less, 3.2 $\mu$m or less. For example, the average particle diameter of the second positive electrode active material may be 1.5 $\mu$m to 5 $\mu$m, preferably 2 $\mu$m to 4.5 $\mu$m, more preferably 2.6 $\mu$m to 4.2 $\mu$m, more preferably 3 $\mu$m to 4 $\mu$m, even more preferably 3 $\mu$m to 3.4 $\mu$m. When the range is satisfied, the rolling density of the positive electrode active material may be increased, and thus electrode density may be improved during electrode preparation, and thus excellent energy density may be implemented.

The first positive electrode active material may be included in an amount of 20 weight percentage (wt%) to 80 wt%, preferably 30 wt% to 70 wt%, and more preferably 40 wt% to 60 wt% with respect to a total weight of the positive electrode active material. When the range is satisfied, high energy density may be implemented by improving rolling density.

The second positive electrode active material may be included in an amount of 20 wt% to 80 wt%, preferably 30 wt% to 70 wt%, and more preferably 40 wt% to 60 wt% with respect to a total weight of the positive electrode active material. When the range is satisfied, high energy density may be implemented by improving rolling density.

The first positive electrode active material and the second positive electrode active material may be included in a weight ratio of 80:20 to 40:60. Specifically, the first positive electrode active material and the second positive electrode active material may be included in a weight ratio of 75:25 to 45:55, more specifically 70:30 to 50:50, and even more specifically 65:45 to 55:45. When the weight ratio is satisfied, the effect of improving a high temperature and a room temperature life characteristic and/or a resistance characteristic may be maximized while energy density may be improved.

In the positive electrode, the first positive electrode active material may be included in a greater weight than the second positive electrode active material.

The first positive electrode active material may include a single particle type particle. In a case where the first positive electrode active material includes the single particle type particle, since the single particle type particle has a large size, lithium has a long diffusion distance, which leads to an increase in a diffusion resistance, so the positive electrode may have low efficiency, so in a case where a silicon-based negative electrode active material is included in the negative electrode, the efficiency may be balanced with the negative electrode. Accordingly, it is possible to solve the problem of lithium ion loss due to irreversible capacity in the application of an existing silicon-based negative electrode active material, and prevent lithium precipitation from occurring on a surface of the negative electrode, and thus the life characteristic of the lithium secondary battery with the positive electrode applied according to the present disclosure may be improved. In addition, in a case where the single-particle-type particle is included in the first positive electrode active material, unlike an existing case where a sacrificial positive electrode material is used, a lithium by-product from the sacrificial positive electrode material during charging and discharging may be prevented from being generated, and thus a high temperature storage characteristic and/or a high temperature life characteristic may be excellent.

The second positive electrode active material may include a single particle-type particle. In a case where the second positive electrode active material includes the single-particle-type particle, since the single-particle-type particle has a large size, lithium has a long diffusion distance, which leads to an increase in a diffusion resistance so, the positive electrode may have low efficiency, so in a case where a silicon-based negative electrode active material is included, the efficiency may be balanced with the negative electrode. Accordingly, it is possible to solve the problem of lithium ion loss due to irreversible capacity in the application of an existing silicon-based negative electrode active material, and prevent lithium precipitation from occurring on a surface of the negative electrode, and thus the life characteristic of the lithium secondary battery with the positive electrode applied according to the present disclosure may be improved. In addition, in a case where the single-particle-type particle is included in the second positive electrode active material, unlike in an existing case where a sacrificial positive electrode material is used, a lithium by-product from the sacrificial positive electrode material during charging and discharging may be prevented from being generated, and thus a high temperature storage characteristic and/or a high temperature life characteristic may be excellent.

The positive electrode active material may be obtained as the positive electrode active material is mixed in distilled water, washed with water, and then dried. When subjected to the water washing treatment described above, the positive electrode of the present disclosure may satisfy the value of $R_{ct} / R_s$, which has the effect of preventing the negative electrode from deterioration or improving the life of the lithium secondary battery.

The positive electrode active material may be prepared as a transition metal precursor and a lithium precursor is mixed by a method such as coprecipitation, and then the positive electrode active material is washed with distilled water before drying.

In a case where the positive electrode active material may include the first positive electrode active material and the second positive electrode active material, the first positive electrode active material and the second positive electrode active material may be subjected to the water washing treatment described above. In this case, the water washing treatment of the first positive electrode active material and the second positive electrode active material may be performed by the same method under the same condition or may be performed by different methods under different conditions, but is not limited thereto.

The positive electrode may include a positive electrode current collector and a positive electrode active material layer including the positive electrode active material described above. In addition to the positive electrode active material described above, the positive electrode active material layer may further optionally include at least one selected from a positive electrode conductive material, a positive electrode binder, and an additive. In a case where the positive electrode active material includes the first positive electrode active material and the second positive electrode active material, in addition to the first positive electrode active material and the second positive electrode active material, the positive electrode active material layer may optionally further include at least one selected from the positive electrode conductive material, the positive electrode binder, and the additive.

The positive electrode current collector is not particularly limited as long as it is conductive without causing chemical changes in the battery and may consist of, for example, copper (Cu), nickel (Ni), aluminum (Al), vanadium (V), gold (Au), platinum (Pt), chromium (Cr), iron (Fe), zinc (Zn), indium (In), Germanium (Ge), lithium (Li), magnesium (Mg), stainless steel (for example, SUS), titanium (Ti), cobalt (Co), or an alloy thereof.

The positive electrode current collector may have a thickness of 3 $\mu$m to 500 $\mu$m and have a fine irregularity formed on a surface of the positive electrode current collector, and thus the adhesion of the positive electrode active material may be also increased. For example, the positive electrode current collector may be used in various forms such as a film, a sheet, a foil, a net, a porous material, a foam, and a non-woven material. The positive electrode current collector may be omitted in some cases.

The positive electrode active material layer may be located on the positive electrode current collector, and specifically, may be located on one surface or both surfaces of the positive electrode current collector. The positive electrode active material layer may have a single-layer structure or a multi-layer structure of two or more layers. In addition, the binding force of the positive electrode active material may be strengthened by forming a fine irregularity on the surface of the positive electrode current collector.

The positive electrode conductive material is used for providing conductivity to an electrode and may be used without a particular limitation as long as it does not cause chemical changes and has electronic conductivity. A specific example may be graphite such as natural graphite or artificial graphite; a carbon-based material such as carbon black, acetylene black, Ketjen black, channel black, furnace black, lamp black, summer black, a carbon fiber, and a carbon nanotube; metal powder or a metal fiber such as copper, nickel, aluminum, and silver; a conductive whisker such as zinc oxide and potassium titanate; a conductive metal oxide such as titanium oxide; or a conductive polymer such as a polyphenylene derivative, of which one type alone or a mixture of two or more types may be used. The positive electrode conductive material may commonly be included in an amount of 1 wt% to 30 wt%, specifically 1 wt% to 20 wt%, and more specifically 1 wt% to 10 wt% with respect to a total weight of the positive electrode active material layer.

The positive electrode binder serves to improve adhesion between positive electrode active material particles and adhesion between the positive electrode active material layer and the positive electrode current collector. A specific example may be polyvinylidene fluoride (PVDF), polyvinylidene fluoride-hexafluoropropylene copolymer (PVDF-co-HFP), polyvinylalcohol (PVA), polyacrylonitrile, carboxymethylcellulose (CMC), starch, hydroxypropylcellulose, regenerated cellulose, polyvinylpyrrolidone (PVP), polytetrafluoroethylene (PTFE), polyethylene (PE), polypropylene (PP), ethylene-propylene-diene monomer rubber (EPDM rubber), sulfonated-EPDM, styrene butadiene rubber (SBR), fluorine rubber, or various copolymers thereof, of which one type alone or a mixture of two or more types may be used. The positive electrode binder may be included in an amount of 1 wt% to 30 wt%, specifically 1 wt% to 20 wt%, and more specifically 1 wt% to 10 wt% with respect to a total weight of the positive electrode active material layer.

The additive may further include, for example, a filler, a coating agent, a dispersant, a thickener, and an ion conductive auxiliary and any known material generally used in the electrode may be used without limitation.

The positive electrode may be prepared according to a general method of preparing the positive electrode except for using the positive electrode active material. The positive electrode may be prepared by applying a composition for forming the positive electrode active material layer including the positive electrode active material onto one surface or both surfaces of the positive electrode current collector, removing a solvent through a drying process, and then rolling the positive electrode current collector with the positive electrode active material layer applied. On the other hand, the positive electrode including an uncoated region may be prepared by a manner of not applying the composition for forming the positive electrode active material layer onto a portion of the positive electrode current collector, for example, one end portion of the positive electrode current collector, when applying the composition for forming the positive electrode active material layer.

In this case, the composition for forming the positive electrode active material layer may further include a solvent, and the solvent may be a solvent generally used in the art, such as dimethyl sulfoxide (DMSO), isopropyl alcohol, N-methylpyrrolidone (NMP), acetone, or water, of which one type alone or a mixture of two or more types may be used. The amount of the solvent used is sufficient to dissolve or disperse the positive electrode active material, the conductive material, the binder, or the like in consideration of application thickness of a slurry and production yield and to have a viscosity that may indicate excellent thickness uniformity when applied for subsequent preparation of the positive electrode.

The positive electrode may also be prepared as the composition for forming the positive electrode active material layer is cast on a separate support and then a film obtained by being peeled from this support is laminated onto the positive electrode current collector.

The present disclosure provides a lithium secondary battery.

The lithium secondary battery may include a positive electrode active material, and may include a positive electrode having a resistance component ratio defined by Equation 1 below of greater than or equal to 2; a negative electrode; and an electrolyte.

[Equation 1]

$$R_{ct} / R_s$$

In Equation 1 above, the $R_{ct}$ refers to a charge transfer resistance of the positive electrode measured in a first frequency domain for the lithium secondary battery, and the $R_s$ refers to a surface or interfacial resistance of the positive electrode measured in a second frequency domain for the lithium secondary battery. The first frequency domain is a frequency domain of greater than or equal to 1 Hz and less than or equal to 1 kHz and, the second frequency domain is a frequency domain of greater than 1 kHz and less than or equal to 1,000 kHz.

The $R_{ct}$ may be determined based on a value obtained by performing a distribution of relaxation time (DRT) analysis on impedance information obtained by performing an electrochemical impedance spectroscopy (EIS) on the lithium secondary battery to generate a graph of impedance based on frequency and integrating a first domain corresponding to the first frequency domain of the graph, and the $R_s$ may be determined based on a value obtained by performing the DRT analysis on impedance information obtained by performing the EIS on the secondary battery to generate the graph of impedance based on frequency and integrating a second domain corresponding to the second frequency domain of the graph.

The contents described above may be applied in the same manner for the positive electrode, the positive electrode active material, the $R_{ct}$, and the $R_s$.

The negative electrode may include a negative electrode current collector and a negative electrode active material layer including a negative electrode active material. The negative electrode active material may include at least one of a silicon-based negative electrode active material and a carbon-based negative electrode active material.

In addition to the negative electrode active material described above, the negative electrode active material layer may optionally further include at least one selected from a negative electrode conductive material, a negative electrode binder, and an additive.

The negative electrode active material layer may be located on the negative electrode current collector, and specifically, may be located on one surface or both surfaces of the negative electrode current collector. The negative electrode active material layer may have a single-layer structure or a multi-layer structure of two or more layers.

In another example, the negative electrode may be a negative electrode for a negative electrodeless battery, in which the negative electrode active material layer is not included immediately after the battery is prepared, but the negative electrode active material layer such as a lithium metal layer is formed during charging.

The negative electrode current collector is not particularly limited as long as it has a high conductivity without causing chemical changes in the battery, and for example, copper, stainless steel (for example. SUS), aluminum, nickel, titanium, fired carbon, copper or stainless steel that is surface-treated or coated with carbon, nickel, titanium, silver, or the like, or an aluminum-cadmium alloy may be used.

The negative electrode current collector may commonly have a thickness of 3 $\mu$m to 500 $\mu$m, and the binding force of the negative electrode active material may be strengthened by forming a fine irregularity on a surface of the negative electrode current collector. For example, the negative electrode current collector may be used in various forms such as a film, a sheet, a foil, a net, a porous material, a foam, and a non-woven material.

The silicon-based negative electrode active material may include silicon (Si), and for example, the silicon-based negative electrode active material may include a particle including silicon (Si).

Specifically, the silicon-based negative electrode active material may be $SiO_x$ ($0 \leq x \leq 2$), a Si/C composite, Si (pure Si), or a combination thereof. The $SiO_x$ ($0 \leq x \leq 2$) may be in a form including Si and $SiO_2$. That is, the x corresponds to a number ratio of O to Si included in the $SiO_x$ ($0 \leq x \leq 2$). Preferably, the silicon-based negative electrode active material may be $SiO_x$ ($0 \leq x \leq 2$), most preferably SiO.

In a case where the negative electrode includes the silicon-based negative electrode active material, the negative electrode has the advantage of having a very high charge and discharge capacity compared to an existing case where only a carbon-based negative electrode active material is used. However, the silicon-based negative electrode active material has a problem that the life characteristic of the lithium secondary battery is degraded due to a large irreversible capacity. The lithium secondary battery according to the present disclosure solves the problem by adjusting the resistance component ratio of the positive electrode to a predetermined range.

The negative electrode active material may include a silicon-based negative electrode active material. The negative electrode active material may further include a carbon-based negative electrode active material.

The silicon-based negative electrode active material may be included in an amount of 1 wt% to 30 wt%, specifically 1 wt% to 25 wt%, and more specifically 2 wt% to 20 wt% with respect to a total weight of the negative electrode active material layer. Alternatively, the silicon-based negative electrode active material may be included in an amount of 1 wt% to 10 wt% or 5 wt% to 10 wt% with respect to a total weight of the negative electrode active material layer. When the content of the silicon-based negative electrode active material satisfies the range, a sufficient capacity characteristic may be implemented.

The carbon-based negative electrode active material may be one or more types selected from the group consisting of graphite such as natural graphite or artificial graphite; and a carbon-based material such as carbon black, acetylene black, Ketjen black, channel black, furnace black, lamp black, summer black, a carbon fiber, and a carbon nanotube. In a case where the carbon-based negative electrode active material is included, the degradation of the life characteristic due to volume changes of the silicon-based negative electrode active material during charging and discharging may be suppressed.

In a case where the negative electrode includes the silicon-based negative electrode active material and the carbon-based negative electrode active material, the silicon-based negative electrode active material and the carbon-based negative electrode active material may be included in a weight ratio of 1:99 to 30:70. Specifically, the silicon-based negative electrode active material and the carbon-based negative electrode active material may be included in a weight ratio of 1.5:98.5 to 20:80, more specifically 2:98 to 15:85, and even more specifically 2.5:97.5 to 10:90. When the weight ratio of the silicon-based negative electrode active material and the carbon-based negative electrode active material satisfies the range, a capacity characteristic may be excellent while a life characteristic may be excellent.

The carbon-based negative electrode active material may be included in an amount of 70 wt% to 99 wt%, specifically 75 wt% to 99 wt%, and more specifically 80 wt% to 98 wt% with respect to a total weight of the positive electrode active material layer. When the content of the carbon-based negative electrode active material satisfies the range, the life characteristic of the battery may be improved while a sufficient capacity characteristic may be implemented.

The negative electrode conductive material is used for providing conductivity to an electrode and may be used without a particular limitation as long as it does not cause chemical changes and has electronic conductivity. A specific example may be graphite such as natural graphite or artificial graphite; a carbon-based material such as carbon black, acetylene black, Ketjen black, channel black, furnace black, lamp black, summer black, a carbon fiber, and a carbon nanotube; metal powder or a metal fiber such as copper, nickel, aluminum, and silver; a conductive whisker such as zinc oxide and potassium titanate; a conductive metal oxide such as titanium oxide; or a conductive polymer such as a polyphenylene derivative, of which one type alone or a mixture of two or more types may be used. The negative electrode conductive material may be included in an amount of 1 wt% to 30 wt%, specifically 1 wt% to 20 wt%, and more specifically 1 wt% to 10 wt% with respect to a total weight of the negative electrode active material layer.

The negative electrode binder serves to improve adhesion between negative electrode active material particles and adhesion between the negative electrode active material and the negative electrode current collector. A specific example may be polyvinylidene fluoride (PVDF), polyvinylidene fluoride-hexafluoropropylene copolymer (PVDF-co-HFP), polyvinylalcohol (PVA), polyacrylonitrile, carboxymethylcellulose (CMC), starch, hydroxypropylcellulose, regenerated cellulose, polyvinylpyrrolidone (PVP), polytetrafluoroethylene (PTFE), polyethylene (PE), polypropylene (PP), ethylene-propylene-diene monomer rubber (EPDM rubber), sulfonated-EPDM, styrene butadiene rubber (SBR), fluorine rubber, or various copolymers thereof, of which one type alone or a mixture of two or more types may be used. The negative electrode binder may be included in an amount of 1 wt% to 30 wt%, preferably 1 wt% to 20 wt%, and more preferably 1 wt% to 10 wt% with respect to a total weight of the negative electrode active material layer.

The additive may further include, for example, a filler, a coating agent, a dispersant, a thickener, and an ion conductive auxiliary, and any known material generally used in the electrode may be used without limitation.

The negative electrode may be prepared according to a general method of preparing the negative electrode except for using the negative electrode active material. The negative electrode may be prepared as a composition for forming the negative electrode active material layer including the negative electrode active material is applied onto one surface or both surfaces of the negative electrode current collector and dried, or the composition for forming the negative electrode active material layer is cast on a separate support, and then a film obtained by being peeled from this support is laminated onto the negative electrode current collector. The composition for forming the negative electrode active material may further include a solvent, and the solvent may be selected from examples of the solvents included in the composition for forming the positive electrode active material layer described above.

In the lithium secondary battery, the electrolyte may be, but is not limited to, an organic-based liquid electrolyte, an inorganic-based liquid electrolyte, a solid polymer electrolyte, a gel-type polymer electrolyte, a solid inorganic electrolyte, or a molten inorganic electrolyte that may be used when preparing the lithium secondary battery.

The electrolyte may include, for example, an organic solvent and/or a lithium salt.

The organic solvent may be used without a particular limitation as long as it may serve as a medium through which ions involved in an electrochemical reaction of the battery may move. Specifically, a linear ester-based solvent such as methyl acetate, ethyl acetate, methyl propionate, ethyl propionate, propyl propionate, or butyl propionate; a cyclic ester-based solvent such as $\gamma$-butyrolactone, $\gamma$-valerolactone, $\gamma$-caprolactone, $\sigma$-valerolactone, or $\varepsilon$-caprolactone; an ether-based solvent such as dibutyl ether or tetrahydrofuran; a ketone-based solvent such as cyclohexanone; an aromatic hydrocarbon solvent such as benzene or fluorobenzene; a carbonate-based solvent such as dimethylcarbonate (DMC), diethylcarbonate (DEC), methylethylcarbonate (MEC), ethylmethylcarbonate (EMC), ethylene carbonate (EC), or propylene carbonate (PC); an alcohol-based solvent such as ethyl alcohol or isopropyl alcohol; nitriles such as R-CN (R is a linear, branched, or cyclic C2-C20 hydrocarbon group and may include a double bonded aromatic ring or ether bond);

amides such as dimethylformamide; dioxolanes such as 1,3-dioxolane; or sulfolanes may be used as the organic solvent. Among these solvents, the carbonate-based solvent is preferable, and a mixture of a cyclic carbonate (for example, ethylene carbonate or propylene carbonate) having a high ionic conductivity and high dielectric constant, which may increase the charge/discharge performance of the battery, and a low-viscosity linear carbonate-based compound (for example, ethylmethyl carbonate, dimethyl carbonate, or diethyl carbonate) is more preferable. In this case, the cyclic carbonate and the linear carbonate may be mixed and used at a volume ratio of about 1:1 to about 1:9 to simultaneously satisfy the high dielectric constant and a low viscosity characteristic and implement an excellent ionic conductivity characteristic, and thus excellent electrolyte performance may be achieved.

In order to improve the life characteristic of the battery, suppress a reduction in battery capacity, and improve the discharge capacity of the battery, or the like, in addition to the electrolyte components, the electrolyte may, for example, further include one or more types of additives such as a halo-alkylene carbonate-based compound such as difluoroethylene carbonate, pyridine, triethylphosphite, triethanolamine, cyclic ether, ethylenediamine, n-glyme, hexaphosphorictriamide, nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride. In this case, the additive may be included in an amount of 0.1 wt% to 5 wt% with respect to a total weight of the electrolyte.

The lithium salt may be used without a particular limitation as long as it is a compound that may provide lithium ions used in the lithium secondary battery. For example, the lithium salt may include $Li^+$ as a cation and at least one selected from the group consisting of $F^-$, $Cl^-$, $Br^-$, $I^-$, $NO_3^-$, $N(CN)_2^-$, $BF_4^-$, $ClO_4^-$, $AlO_4^-$, $AlCl_4^-$, $PF_6^-$, $BF_6^-$, $SF_6^-$, $B_{10}Cl_{10}^-$, $BF_2C_2O_4^-$, $BC_4O_8^-$, $PF_4C_2O_4^-$, $PF_2C_4O_8^-$, $(CF_3)_2PF_4^-$, $(CF_3)_3PF_3^-$, $(CF_3)_4PF_2^-$, $(CF_3)_5PF^-$, $(CF_3)_6P^-$, $F_3SO_3^-$, $C_4F_9SO_3^-$, $CF_3CF_2SO_3^-$, $(FSO_2)_2N^-$, $CF_3CF_2(CF_3)_2CO^-$, $(CF_3SO_2)_2CH^-$, $CH_3SO_3^-$, $CF_3(CF_2)_7SO_3^-$, $CF_3CO_2^-$, $CH_3CO_2^-$, $SCN^-$ and $(CF_3CF_2SO_2)_2N^-$ as an anion.

Specifically, the lithium salt may be at least one selected from the group consisting of LiCl, LiBr, LiI, $LiBF_4$, $LiClO_4$, $LiAlO_4$, $LiAlCl_4$, $LiPF_6$, $LiSbF_6$, $LiAsF_6$, $LiB_{10}Cl_{10}$, LiBOB ($LiB(C_2O_4)_2$), $LiCF_3SO_3$, LiTFSI ($LiN(SO_2CF_3)_2$), LiFSI ($LiN(SO_2F)_2$), $LiCH_3SO_3$, $LiCF_3CO_2$, $LiCH_3CO_2$ and LiBETI ($LiN(SO_2CF_2CF_3)_2$). Specifically, the lithium salt may include a single material or a mixture of two or more selected from the group consisting of $LiBF_4$, $LiClO_4$, $LiPF_6$, LiBOB ($LiB(C_2O_4)_2$), $LiCF_3SO_3$, LiTFSI ($LiN(SO_2CF_3)_2$), LiFSI (($LiN(SO_2F)_2$) and LiBETI ($LiN(SO_2CF_2CF_3)_2$).

The concentration of the lithium salt in the electrolyte may be included in a range of 0.1 M to 4 M, specifically 0.1 M to 2 M, and more specifically 0.8 M to 1.6 M. In a case where the concentration of the lithium salt is included within the range, the electrolyte may have an appropriate conductivity and viscosity, so the excellent performance of the electrolyte may be achieved, and lithium ions may move effectively, and thus an output characteristic of the lithium secondary battery may be improved.

The electrolyte may include a solid electrolyte, and in a case where the solid electrolyte is included, the solid electrolyte may replace a separator, and thus the separator may not be included.

The solid electrolyte may include, for example, an oxide-based solid electrolyte, a sulfide-based solid electrolyte, a phosphoric acid-based solid electrolyte, a polymer-based solid electrolyte, or a halide-based solid electrolyte, but is not limited thereto.

The sulfide-based solid electrolyte may include a sulfur atom (S), have an ionic conductivity of a metal belonging to group 1 or 2 of a periodic table, and have electronic insulating properties. The sulfide-based solid electrolyte may preferably include at least Li, S, and P as elements and have a lithium ion conductivity but may include elements other than Li, S, and P, depending on a purpose or case.

Specifically, for example, $Li_2S$-$P_2S_5$, $Li_2S$-$P_2S_5$-LiCl, $Li_2S$-$P_2S_5$-$H_2S$, $Li_2S$-$P_2S_5$-$H_2S$-LiCl, $Li_2S$-LiI-$P_2S_5$, $Li_2S$-LiI-$Li_2OP_2S_5$, $Li_2S$-LiBr-$P_2S_5$, $Li_2$-$SLi_2O$-$P_2S_5$, $Li_2S$-$Li_3PO_4$-$P_2S_5$, $Li_2S$-$P_2S_5$-$P_2O_5$, $Li_2S$-$P_2S_5$-$SiS_2$, $Li_2S$-$P_2S_5$-$SiS_2$-LiCl, $Li_2S$-$P_2S_5$-SnS, $Li_2S$-$P_2S_5$-$Al_2S_3$, $Li_2S$-$GeS_2$, $Li_2S$-$GeS_2$-ZnS, $Li_2SGa_2S_3$, $Li_2S$-$GeS_2$-$Ga_2S_3$, $Li_2S$-$GeS_2$-$P_2S_5$, $Li_2S$-$GeS_2$-$Sb_2S_5$, $Li_2S$-$GeS_2$-$Al_2S_3$, $Li_2S$-$SiS_2$, $Li_2S$-$Al_2S_3$, $Li_2S$-$SiS_2$-$Al_2S_3$, $Li_2S$-$SiS_2$-$P_2S_5$, $Li_2S$-$SiS_2$-$P_2Ss$-LiI, $Li_2S$-$SiS_2$-LiI, $Li_2S$-$SiS_2$-$Li_4SiO_4$, $Li_2S$-$SiS_2$-$Li_3PO_4$, $Lii_{10}GeP_2S_{12}$, or the like may be used as the sulfide-based solid electrolyte.

The oxide-based solid electrolyte may be, for example, $Li_{xa}La_{ya}TiO_3$ [xa=0.3 to 0.7, ya=0.3 to 0.71 (LLTO), $Li_{xb}La_{yb}Zr_{zb}Mbb_{mb}O_{nb}$ (Mbb is at least one or more types of elements among Al, Mg, Ca, Sr, V, Nb, Ta, Ti, Ge, In, and Sn, xb satisfies $5 \leq xb \leq 10$, and yb satisfies $1 \leq yb \leq 4$, zb satisfies $1 \leq zb \leq 4$, mb satisfies $0 \leq mb \leq 2$, and nb satisfies $5 \leq nb \leq 20$), $Li_{xc}B_{yc}Mcc_{zc}O_{nc}$ (Mcc is at least one or more types of elements element among C, S, Al, Si, Ga, Ge, In, and Sn, xc satisfies $0 \leq xc \leq 5$, yc satisfies $0 \leq yc \leq 1$, and zc satisfies $0 \leq zc \leq 1$, and nc satisfies $0 \leq nc \leq 6$), $Li_{xd}(Al, Ga)_{yd}(Ti, Ge)_{zd}Si_{ad}P_{md}O_{nd}$ (however, $1 \leq xd \leq 3$, $0 \leq yd \leq 1$, $0 \leq zd \leq 2$, $0 \leq ad \leq 1$, $1 \leq md \leq 7$, $3 \leq nd \leq 13$), $Li_{(3-2xe)}Mee_{xe}DeeO$ (xe indicates a number greater than 0 and less than or equal to 0.1, Mee indicates a divalent metal atom, and Dee indicates a halogen atom or a combination of two or more types of halogen atoms), $Li_{xf}Si_{yf}O_{zf}$ ($1 \leq xf \leq 5$, $0 < yf \leq 3$, $1 \leq zf \leq 10$), $Li_{xg}S_{yg}O_{zg}$ ($1 \leq xg \leq 3$, $0 < yg \leq 2$, $1 \leq zg \leq 10$), $Li_3BO_3$-$Li_2SO_4$, $Li_2O$-$B_2O_3$-$P_2O_5$, $Li_2O$-$SiO_2$, $Li_6BaLa_2Ta_2O_{12}$, $Li_3PO_{(4-3/2w)}N_w$ (w is w<1), $Li_{3.5}Zn_{0.25}GeO_4$ having a lithium super ionic conductor (LISICON)-type crystal structure, $La_{0.55}Li_{0.35}TiO_3$ having a perovskite-type crystal structure, $LiTi_2P_3O_{12}$ having a sodium (Na) super ionic conductor (NASICON)-type crystal structure, $Li_{1+xh+yh}(Al, Ga)_{xh}(Ti, Ge)_{2-xh}Si_{yh}P_{3-yh}O_{12}$ (however, $0 \leq xh \leq 1$, $0 \leq yh \leq 1$), and $Li_7La_3Zr_2O_{12}$(LLZO) having a garnet-type crystal structure. Alternatively, a phosphorus compound including Li, P, and O may also be used. An example may be lithium phosphate ($Li_3PO_4$) and LiPON in which part of oxygen in lithium phosphate is replaced with nitrogen and LiPOD1 (D1 is at least one type selected from Ti, V, Cr, Mn, Fe, Co, Ni, Cu, Zr, Nb, Mo, Ru, Ag, Ta, W, Pt, Au, and the like). Alternatively, LiAlON (A1 is at least one type selected from Si, B, Ge, Al, C, Ga, and the like) may also be used.

The polymer-based solid electrolyte is an ion conductive material and includes a polymer material commonly used as a solid electrolyte material for an all-solid-state battery but is not particularly limited thereto. The polymer-based solid electrolyte may, for example, include a polyether-based polymer, a polycarbonate-based polymer, an acrylate-based polymer, a polysiloxane-based polymer, a phosphazene-based polymer, a polyethylene oxide (PEO), a polyethylene derivative, an alkylene oxide derivative, a phosphoric acid ester polymer, polation lysine, polyester sulfide, polyvinyl alcohol, polyvinylidene fluoride, or a polymer including an ionic dissociation group. Alternatively, the polymer-based solid electrolyte may include a branched copolymer in which an amorphous polymer such as polymethyl methacrylate (PMMA), polycarbonate, polysiloxane, and/or phosphazene is copolymerized as a comonomer on a polyethyleneoxide (PEO) main chain as a polymer resin, a comb-like polymer resin and a cross-linked polymer resin.

The solid electrolyte may include a gel-type polymer electrolyte. The gel-type polymer electrolyte includes an organic electrolyte including a lithium salt and a polymer resin, and the organic electrolyte includes 60 to 400 parts by weight with respect to 100 weight of the polymer resin. The polymer resin applied onto the gel-type polymer electrolyte is not limited to a specific component but may include, for example, polyvinylchloride (PVC), Poly(Methyl methacrylate) (PMMA), polyacrylonitrile (PAN), poly(vinylidene fluoride) (PVDF), poly(vinylidene fluoride)-hexafluoropropylene (PVDF-HFP), or the like.

The lithium secondary battery may optionally further include a separator.

Meanwhile, in a case where the electrolyte includes the solid electrolyte described above, the lithium secondary battery may not include a separate separator as the solid electrolyte serves as the separator, but is not limited thereto.

The separator, which separates the negative electrode and the positive electrode and provides a migration passage for lithium ions, may be used without a particular limitation as long as it may be generally used as the separator in the lithium secondary battery, and in particular, preferably has a low resistance to the ion movement of the electrolyte and excellent electrolyte impregnation properties. Specifically, a porous polymer film, for example, a porous polymer film prepared from a polyolefin polymer such as an ethylene homopolymer, a propylene homopolymer, an ethylene/butene copolymer, an ethylene/hexene copolymer, and an ethylene/methacrylate copolymer, or a laminated structure of two or more layers thereof may be used. In addition, a general porous non-woven fabric, for example, a non-woven fabric formed of a high melting point glass fiber, a polyethylene terephthalate fiber, or the like, may be used. In addition, a coated separator including a ceramic component or a polymer material may be used to ensure a heat resistance or mechanical strength and may optionally be used in a single-layer or multi-layer structure. The separator may also be omitted in some cases.

The present disclosure provides a method of preparing a positive electrode.

The method of preparing the positive electrode may include (A) mixing a positive electrode active material in distilled water and washing the positive electrode active material with water; (B) drying the washed positive electrode active material; and (C) applying a positive electrode slurry including the dried positive electrode active material onto a positive electrode current collector.

In the operation (A), water washing may be performed at a temperature of 3 degrees Celsius (°C) to 40°C. The operation (A) may include (a1) mixing a first positive electrode active material in distilled water and performing a first water washing; and (a2) mixing a second positive electrode active material in distilled water and performing a second water washing. Accordingly, a resistance component of the positive electrode may be adjusted to a specific range, and the positive electrode of the present disclosure may satisfy a value of $R_{ct} / R_s$, and thus the performance of a lithium secondary battery may be improved.

The first positive electrode active material and the second positive electrode active material may have different average particle diameters ($D_{50}$) from each other.

In the operation (a1), the washing intensity of the first positive electrode active material may be higher than the washing intensity of the second positive electrode active material in the operation (a2). That is, the first water washing may be performed at a higher temperature than the second water washing. Accordingly, a resistance component of the positive electrode may be adjusted to a specific range.

The first water washing may be performed at 20°C to 40°C. Specifically, the first water washing may be performed at 25°C to 35°C, more specifically at 27°C to 38°C. In a case where the first water washing is performed in the temperature range, an interface resistance of the positive electrode may be adjusted to a desired range.

In the operation (a1), the first water washing may be performed by mixing the first positive electrode active material in an amount of 50 weight percentage (wt%) to 70 wt% with respect to a total weight of the distilled water. Specifically, the first water washing may be performed by mixing the first positive electrode active material in an amount of 55 wt% to 65 wt%, more specifically 57 wt% to 63 wt%. In this case, high-temperature durability may be prevented from deterioration by reducing an amount of residual lithium on a surface of the positive electrode active material.

In the operation (a2), the second positive electrode active material has a smaller particle size and a larger specific surface area than the first positive electrode active material. By washing the second positive electrode active material with water at a low intensity, the high-temperature durability of the second positive electrode active material may be prevented from deterioration and a resistance component of the positive electrode may be adjusted to a specific range.

The second water washing may be performed at 3°C to 18°C. Specifically, the second water washing may be performed at 5°C to 15°C, and more specifically at 7°C to 13°C. In a case where the second water washing is performed in the temperature range, the high-temperature durability may be prevented from deterioration while a resistance component of the positive electrode may be adjusted to a desired range.

In the operation (a2), the second water washing may be performed by mixing the second positive electrode active material in an amount of 65 wt% to 85 wt% with respect to a total weight of the distilled water. Specifically, the second water washing may be performed by mixing the second positive electrode active material in an amount of 70 wt% to 80 wt%, more specifically 72 wt% to 78 wt%. In this case, the high-temperature durability may be prevented from deterioration by reducing an amount of residual lithium on a surface of the positive electrode active material.

The drying of the operation (B) may be performed at a temperature range selected from 60°C to 200°C. The drying may be performed at a temperature range selected from specifically 70°C to 180°C, and more specifically at 80°C to 160°C.

That is, the operation (B) may include drying the washed positive electrode active material at a temperature range selected from 60°C to 200°C. A manner of the drying may be a general manner of drying the positive electrode active material and is not particularly limited.

The operation (B) may include (b1) drying the first positive electrode active material, which is first washed in the operation (a1) and (b2) drying the second positive electrode active material, which is second washed in the operation (a2).

The drying in the operation (b1) and the operation (b2) may be performed at a temperature range selected from 60°C to 200°C.

The drying may be performed at a temperature range selected from specifically 70°C to 180°C, and more specifically at 80°C to 160°C.

The drying in the operation (b1) and the operation (b2) may be performed at the same temperature within the range or may be performed at different temperatures from each other.

The operation (C) is an operation of applying the positive electrode slurry comprising the dried positive electrode active material onto the positive electrode current collector and comprises preparing the positive electrode slurry as the positive electrode active material is mixed in a solvent before applied onto the positive electrode current collector.

In this case, the positive electrode active material may comprise the first positive electrode active material and the second positive electrode active material, and as for the first positive electrode active material and the second positive electrode active material, the above description may be applied in the same manner.

The positive electrode slurry may further comprise a positive electrode binder, a positive electrode conductive material, and/or an additive, and as for the positive electrode binder, the positive electrode conductive material, and the additive, the above description may be applied in the same manner.

As for the solvent used in the positive electrode slurry, the description of the solvent included in the composition for forming the positive electrode active material layer described above may be applied in the same manner.

In the operation (C), the positive electrode may be prepared by applying the positive electrode slurry onto the positive electrode current collector to form the positive electrode active material layer. Specifically, the positive electrode may be prepared as the positive electrode slurry is applied onto one surface or both surfaces of the positive electrode current collector, then dried and rolled to form the positive electrode active material layer. The positive electrode slurry may be the same as the composition for forming the positive electrode active material layer described above.

The application may be performed continuously or discontinuously using various application methods well known in the art, such as slot die coating, slide coating, and curtain coating, but is not limited thereto.

After the operation (C), (D) applying the positive electrode slurry onto the positive electrode current collector and then drying the positive electrode slurry may be further included. The drying in the operation (D) may be performed at 40°C to 180°C, specifically 60°C to 160°C, and more specifically 70°C to 150°C. The drying method may be applied without limitation as long as it is a method of drying an electrode.

After the (D) operation, (E) rolling the dried positive electrode slurry and positive electrode current collector may be further included. The rolling may be performed according to a roll press method in which rolling is performed by adjusting the thickness of the positive electrode by controlling an upper/lower roll gap, but is not limited thereto.

The present disclosure provides a method of preparing a negative electrode.

The method of preparing the negative electrode may include forming a negative electrode active material layer by applying a negative electrode slurry including the negative electrode active material onto a negative electrode current collector, drying the negative electrode current collector and the negative electrode active material layer, and rolling the dried negative electrode current collector and negative electrode active material layer.

As for the negative electrode active material and the negative electrode current collector, the above description may be applied in the same manner.

The negative electrode slurry may further include a negative electrode binder, a negative electrode conductive material and/or an additive, and as for the negative electrode binder, the negative electrode conductive material, and the additive, the above description may be applied in the same manner.

A solvent used in the negative electrode slurry may be an aqueous solvent, an organic solvent, or a combination thereof.

The aqueous solvent may include, for example, water, and the organic solvent may include one or more types selected from the group consisting of N-methyl pyrrolidone (NMP), dimethylformamide (DMF), dimethyl sulfoxide (DMSO), dihydrolevoglucosenone (Cyrene), $\gamma$-valerolactone, dimethyl isosorbide (DMI), and methyl-5-(dimethylamino)-2-methyl-5-oxopentanoate and may preferably include N-methyl pyrrolidone.

The application may be performed continuously or discontinuously using various application methods well known in the art, such as slot die coating, slide coating, and curtain coating, but is not limited thereto.

Drying the negative electrode active material layer and the negative electrode current collector may be performed at 40°C to 180°C. Specifically, the drying may be performed at 60°C to 160°C, and more specifically at 70°C to 150°C.

The rolling may be performed according to a roll press method in which rolling is performed by adjusting the thickness of the negative electrode by controlling an upper/lower roll gap, but is not limited thereto.

The lithium secondary battery may be a pouch type, a square-type, or a cylindrical type, and a shape and size thereof may be applied without limitation as long as it is a generally used secondary battery.

In addition, the lithium secondary battery may further include a case that may seal an electrode assembly such as a container, a pouch, a pack, or a module accommodating the electrode assembly including the positive electrode, the electrolyte, and the negative electrode. The case may optionally further include a sealing member.

Hereinafter, the present disclosure will be explained in detail with reference to examples in order to specifically explain the disclosed contents of the present disclosure as described above and the intended actions and effects of the present disclosure. However, the examples may be modified into various other forms, and the scope of this specification is not to be construed as being limited to the examples. It is emphasized that the examples represent the present disclosure and are provided to explain the present disclosure in more detail to those skilled in the art.

### Example

**<Example 1> - Water Washing Treatment**

<First Positive electrode Active Material Preparation>

As $NiSO_4$, $CoSO_4$ and $MnSO_4$ were mixed in distilled water in such an amount that a molar ratio of nickel: cobalt: manganese was 83:7:10, a transition metal aqueous solution was prepared.

Next, as deionized water was added to a reactor, nitrogen gas was purged into the reactor to remove dissolved oxygen in water and to create a non-oxidizing atmosphere in the reactor, and then a coprecipitation reaction was performed while NaOH was added, a precursor having an average particle diameter ($D_{50}$) of 8.6 micrometers ($\mu$m) and represented by $Ni_{0.8}Co_{0.1}Mn_{0.1}(OH)_2$ was prepared.

As the precursor and LiOH were mixed in a 1:1.05 ratio, mixed with Al as a doping element, and calcined at 910 degrees Celsius (°C) for 16 hours, a lithium transition metal oxide represented by $Li[Ni_{0.81}Co_{0.07}Mn_{0.10}Al_{0.02}]O_2$ was prepared.

Then, as the lithium transition metal oxide was mixed in distilled water at 30°C to have a solid content of 60 weight percentage (wt%), washed with water, and dried, a first positive electrode active material was prepared. It was confirmed that the first positive electrode active material had an average particle diameter ($D_{50}$) of 8.6 $\mu$m and was a single particle type particle.

<Second Positive electrode Active Material Preparation>

As $NiSO_4$, $CoSO_4$ and $MnSO_4$ were mixed in distilled water in such an amount that a molar ratio of nickel: cobalt: manganese was 83:7:10, a transition metal aqueous solution was prepared.

Next, as deionized water was added to a reactor, nitrogen gas was purged into the reactor to remove dissolved oxygen in water and to create a non-oxidizing atmosphere in the reactor, and then a coprecipitation reaction was performed while NaOH was added, a precursor having an average particle diameter ($D_{50}$) of 3.1 micrometers ($\mu$m) and represented by $Ni_{0.8}Co_{0.1}Mn_{0.1}(OH)_2$ was prepared.

As the precursor and LiOH were mixed in a 1:1.05 ratio, mixed with Al as a doping element, and calcined at 910 degrees Celsius (°C) for 16 hours, a lithium transition metal oxide represented by $Li[Ni_{0.91}Co_{0.07}Mn_{0.10}Al_{0.02}]O_2$ was prepared.

Then, as the lithium transition metal oxide was mixed in distilled water at 10°C to have a solid content of 75 weight percentage (wt%), washed with water, and dried, a second positive electrode active material was prepared. It was confirmed that the second positive electrode active material had an average particle diameter ($D_{50}$) of 3.1 $\mu$m and was a single particle type particle.

<Positive electrode Preparation>

As the first positive electrode active material and the second positive electrode active material prepared above were mixed at a weight ratio of 60:40, a positive electrode material was prepared, and as the positive electrode material, carbon black as a conductive material, and polyvinylidene fluoride (PVDF) as a binder were mixed in an N-methylpyrrolidone solvent at a weight ratio of 96:2:2, a positive electrode slurry was prepared. As the positive electrode slurry was applied onto one surface of an aluminum current collector with a thickness of 20 micrometers ($\mu$m), dried at 130 degrees Celsius (°C), and then rolled, a positive electrode with a thickness of 70 $\mu$m was prepared.

<Lithium Secondary Battery Preparation>

As a negative electrode active material mixed with SiO/artificial graphite at a weight ratio of 5:95 as a negative electrode active material, carbon black as a conductive material, styrene butadiene rubber (SBR)as a binder, and carboxymethylcellulose (CMC)as a thickener were mixed in distilled water at a weight ratio of 95.6:1.0:2.3:1.1, a negative electrode slurry was prepared. As the negative electrode slurry was applied onto one surface of a copper current collector with a thickness of 12 micrometers ($\mu$m), dried at 130 degrees Celsius (°C), and then rolled, a negative electrode was prepared (Slurry solid content: 50 weight percentage (wt%) with respect to a total weight of the negative electrode slurry).

As an electrode assembly was prepared by interposing a porous polyethylene separator between each positive electrode and negative electrode prepared above, then placed inside a battery case, and then injected with an electrolyte, a lithium secondary battery was prepared. In this case, the electrolyte was used as an electrolyte, in which $LiPF_6$ of 1.0 M was dissolved in an organic solvent mixed with ethylene carbonate (EC) and ethylmethyl carbonate (EMC) at a volume ratio of 3:7.

**<Comparative Example 1> - Boron Coating**

<First Positive electrode Active Material Preparation>

As $NiSO_4$, $CoSO_4$ and $MnSO_4$ were mixed in distilled water in such an amount that a molar ratio of nickel: cobalt: manganese was 83:7:10, a transition metal aqueous solution was prepared.

Next, as deionized water was added to a reactor, nitrogen gas was purged into the reactor to remove dissolved oxygen in water and to create a non-oxidizing atmosphere in the reactor, and then a coprecipitation reaction was performed while NaOH was added, a precursor having an average particle diameter ($D_{50}$) of 8.6 micrometers ($\mu$m) and represented by $Ni_{0.8}Co_{0.1}Mn_{0.1}(OH)_2$ was prepared.

As the precursor and LiOH were mixed in a 1:1.05 ratio, mixed with Al as a doping element, and calcined at 910 degrees Celsius (°C) for 16 hours, a lithium transition metal oxide represented by $Li[Ni_{0.81}Co_{0.07}Mn_{0.10}Al_{0.02}]O_2$ was prepared.

Then, as the lithium transition metal oxide was mixed with a boron precursor and then heat-treated at 750°C for 5 hours, a B-coated first positive electrode active material was prepared. It was confirmed that the first positive electrode active material had an average particle diameter ($D_{50}$) of 6 $\mu$m to 12 $\mu$m and was a single particle type particle.

<Second Positive electrode Active Material Preparation>

As $NiSO_4$, $CoSO_4$ and $MnSO_4$ were mixed in distilled water in such an amount that a molar ratio of nickel: cobalt: manganese was 83:7:10, a transition metal aqueous solution was prepared.

Next, as deionized water was added to a reactor, nitrogen gas was purged into the reactor to remove dissolved oxygen in water and to create a non-oxidizing atmosphere in the reactor, and then a coprecipitation reaction was performed while NaOH was added, a precursor having an average particle diameter ($D_{50}$) of 3.1 micrometers ($\mu$m) and represented by $Ni_{0.8}Co_{0.1}Mn_{0.1}(OH)_2$ was prepared.

As the precursor and LiOH were mixed in a 1: 1.05 ratio, mixed with Al as a doping element, and calcined at 910 degrees Celsius (°C) for 16 hours, a lithium transition metal oxide represented by $Li[Ni_{0.81}Co_{0.07}Mn_{0.10}Al_{0.02}]O_2$ was prepared.

Then, as the lithium transition metal oxide was mixed with a boron precursor and then heat-treated at 750°C for 5 hours, a B-coated second positive electrode active material was prepared. It was confirmed that the second positive electrode active material had an average particle diameter ($D_{50}$) of 3.97 $\mu$m and was a single particle type particle.

<Positive electrode Preparation>

As the first positive electrode active material and the second positive electrode active material prepared above were mixed at a weight ratio of 60:40, a positive electrode material was prepared, and as the positive electrode material, carbon black as a conductive material, and polyvinylidene fluoride (PVDF) as a binder were mixed in an N-methylpyrrolidone solvent at a weight ratio of 96:2:2, a positive electrode slurry was prepared. As the positive electrode slurry was applied onto one surface of an aluminum current collector with a thickness of 20 micrometers ($\mu$m), dried at 130 degrees Celsius (°C), and then rolled, a positive electrode with a thickness of 70 $\mu$m was prepared.

<Lithium Secondary Battery Preparation>

As a negative electrode active material mixed with SiO/artificial graphite at a weight ratio of 6:94 as a negative electrode active material, carbon black as a conductive material, SBR as a binder, and CMC as a thickener were mixed in distilled water at a weight ratio of 95.6:1.0:2.3:1.1, a negative electrode slurry was prepared. As the negative electrode slurry was applied onto one surface of a copper current collector with a thickness of 12 micrometers ($\mu$m), dried at 130 degrees Celsius (°C), and then rolled, a negative electrode was prepared (Slurry solid content: 50 weight percentage (wt%) with respect to a total weight of the negative electrode slurry).

As an electrode assembly was prepared by interposing a porous polyethylene separator between each positive electrode and negative electrode prepared above, then placed inside a battery case, and then injected with an electrolyte, a lithium secondary battery was prepared. In this case, the electrolyte was used as an electrolyte, in which $LiPF_6$ of 1.0 M was dissolved in an organic solvent mixed with ethylene carbonate (EC) and ethylmethyl carbonate (EMC) at a volume ratio of 3:7.

**<Comparative Example 2> - Cobalt Coating**

<First Positive electrode Active Material Preparation>

As $NiSO_4$, $CoSO_4$ and $MnSO_4$ were mixed in distilled water in such an amount that a molar ratio of nickel: cobalt: manganese was 83:7:10, a transition metal aqueous solution was prepared.

Next, as deionized water was added to a reactor, nitrogen gas was purged into the reactor to remove dissolved oxygen in water and to create a non-oxidizing atmosphere in the reactor, and then a coprecipitation reaction was performed while NaOH was added, a precursor having an average particle diameter ($D_{50}$) of 8.6 micrometers $\mu$m and represented by $Ni_{0.8}Co_{0.1}Mn_{0.1}(OH)_2$ was prepared.

As the precursor and LiOH were mixed in a 1:1.05 ratio, mixed with Al as a doping element, and calcined at 910 degrees Celsius (°C) for 16 hours, a lithium transition metal oxide represented by $Li[Ni_{0.81}Co_{0.07}Mn_{0.10}Al_{0.02}]O_2$ was prepared.

Then, as the lithium transition metal oxide was mixed with $Co(OH)_2$ and heat-treated at 750 °C for 5 hours, a Co-coated first positive electrode active material was prepared. It was confirmed that the first positive electrode active material had an average particle diameter ($D_{50}$) of 6 $\mu$m to 12 $\mu$m and was a single particle type particle.

<Second Positive electrode Active Material Preparation>

As $NiSO_4$, $CoSO_4$ and $MnSO_4$ were mixed in distilled water in such an amount that a molar ratio of nickel: cobalt: manganese was 83:7:10, a transition metal aqueous solution was prepared.

Next, as deionized water was added to a reactor, nitrogen gas was purged into the reactor to remove dissolved oxygen in water and to create a non-oxidizing atmosphere in the reactor, and then a coprecipitation reaction was performed while NaOH was added, a precursor having an average particle diameter ($D_{50}$) of 3.1 micrometers ($\mu$m) and represented by $Ni_{0.8}Co_{0.1}Mn_{0.1}(OH)_2$ was prepared.

As the precursor and LiOH were mixed in a 1:1.05 ratio, mixed with Al as a doping element, and calcined at 910 degrees Celsius (°C) for 16 hours, a lithium transition metal oxide represented by $Li[Ni_{0.81}Co_{0.07}Mn_{0.10}Al_{0.02}]O_2$ was prepared.

Then, as the lithium transition metal oxide was mixed with $Co(OH)_2$ and heat-treated at 750 °C for 5 hours, a Co-coated second positive electrode active material was prepared. It was confirmed that the second positive electrode active material had an average particle diameter ($D_{50}$) of 6.19 $\mu$m and was a single particle type particle.

<Positive electrode Preparation>

As the first positive electrode active material and the second positive electrode active material prepared above were mixed at a weight ratio of 60:40, a positive electrode material was prepared, and as the positive electrode material, carbon black as a conductive material, and polyvinylidene fluoride (PVDF) as a binder were mixed in an N-methylpyrrolidone solvent at a weight ratio of 96:2:2, a positive electrode slurry was prepared. As the positive electrode slurry was applied onto one surface of an aluminum current collector with a thickness of 20 micrometers ($\mu$m), dried at 130 degrees Celsius (°C), and then rolled, a positive electrode with a thickness of 70 $\mu$m was prepared.

<Lithium Secondary Battery Preparation>

As a negative electrode active material mixed with SiO/artificial graphite at a weight ratio of 6:94 as a negative electrode active material, carbon black as a conductive material, styrene butadiene rubber (SBR) as a binder, and carboxymethylcellulose (CMC) as a thickener were mixed in distilled water at a weight ratio of 95.6:1.0:2.3:1.1, a negative electrode slurry was prepared. As the negative electrode slurry was applied onto one surface of an copper current collector with a thickness of 12 micrometers ($\mu$m), dried at 130 degrees Celsius (°C), and then rolled, a negative electrode was prepared (Slurry solid content: 50 weight percentage (wt%) with respect to a total weight of the negative electrode slurry).
As an electrode assembly was prepared by interposing a porous polyethylene separator between each positive electrode and negative electrode prepared above, then placed inside a battery case, and then injected with an electrolyte, a lithium secondary battery was prepared. In this case, the electrolyte was used as an electrolyte in which $LiPF_6$ of 1.0 M was dissolved in an organic solvent mixed with ethylene carbonate (EC) and ethylmethyl carbonate (EMC) at a volume ratio of 3:7.

<Experimental Example 1> - Rct / **Rs Evaluation**

As an electrode assembly was prepared by interposing a porous polyethylene separator between each positive electrode and negative electrode prepared in Example 1 and Comparative Examples 1 and 2, then placed inside a battery case, and then injected with an electrolyte, a lithium secondary battery was prepared. In this case, the electrolyte was used as an electrolyte, in which $LiPF_6$ of 1.0 mol (M) was dissolved in a mixed organic solvent of ethylene carbonate (EC) and ethylmethyl carbonate (EMC) in a volume ratio of 3:7.
Next, the prepared lithium secondary battery was charged at a rate of 0.1 C to 4.2 voltage (V) under a constant current-constant voltage (CC-CV) charging condition at 25 degrees Celsius (°C), and subjected to 0.05 C current cut, and then discharged at a rate of 0.1 C to 3.0 V under a CC condition as one cycle. After performing 100 cycles, the prepared lithium secondary battery was charged up to SOC 50 percent (%), and $R_s$ and $R_{ct}$ were measured by performing a distribution of relaxation time (DRT) analysis on impedance information obtained by performing an electrochemical impedance spectroscopy (EIS) on the secondary battery using a Biologic VMP3 device (under a condition of 1,000 kilohertz (kHz) to 10 megahertz (mHz) range and 25°C). The results are shown in Table 1 below.

[Table 1]

| Category | 100 cycle positive electrode interface, surface resistance ($R_s$) [$\Omega$] | 100 cycle positive electrode charge transfer resistance ($R_{ct}$) [$\Omega$] | $R_{ct}$ / $R_s$ |
|---|---|---|---|
| **Example** 1 (#4) | 0.187 | 0.462 | 2.471 |
| Comparative Example 1 (#3) | 0.144 | 0.202 | 1.403 |
| Comparative Example 2 (#5) | 0.266 | 0.129 | 0.485 |

Referring to Table 1, it may be confirmed that the positive electrode prepared in Example 1 has a value of $R_{ct}$ / $R_s$ of greater than or equal to 2, but the positive electrode prepared in Comparative Examples 1 and 2 has a value of $R_{ct}$ / $R_s$ of less than 2.

<Experimental Example 2> - **Room Temperature Life Characteristic Evaluation**

The lithium secondary battery prepared in Example 1 and Comparative Examples 1 and 2 was charged using an electrochemical charger and discharger at a rate of 0.5 C to 4.2 V under a constant current-constant voltage (CC-CV) condition at 45 degrees Celsius (°C), then subjected to 0.05 C current cut, and discharged at a rate of 1.0 C to 3.0 V under a CC condition as one cycle. After performing 300 cycles of charge and discharge, a capacity retention rate was evaluated.

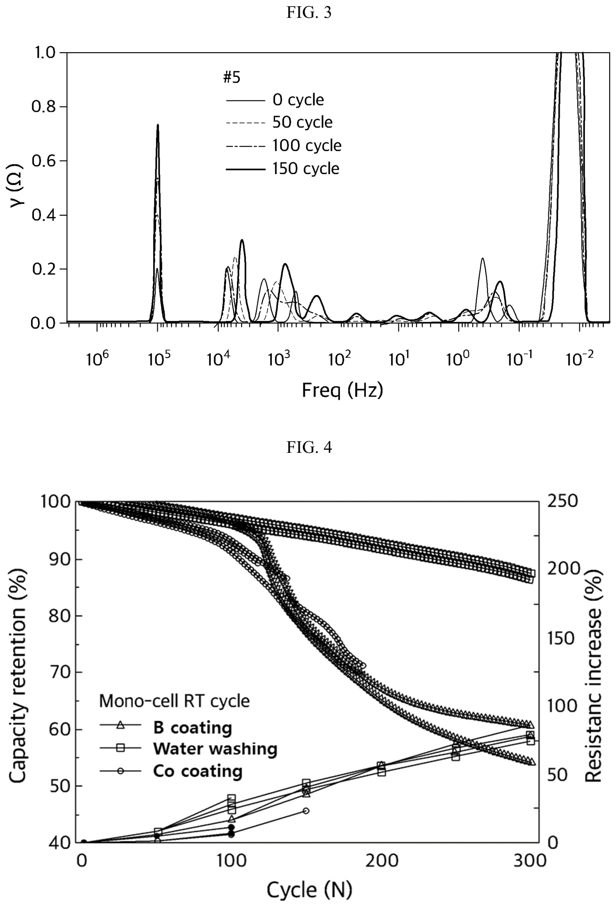

The results are shown in FIG. 4.

**Claims**

1. A positive electrode comprising a positive electrode active material and having a resistance component ratio defined by Equation 1 below of greater than or equal to 2:

$$[\text{Equation } 1]$$

$$R_{ct} / R_s$$

wherein, in Equation 1 above, the $R_{ct}$ refers to a charge transfer resistance of the positive electrode measured in a first frequency domain for a secondary battery comprising the positive electrode, and

the $R_s$ refers to a surface or interfacial resistance of the positive electrode measured in a second frequency domain for the secondary battery comprising the positive electrode, and

wherein the first frequency domain is a frequency domain of greater than or equal to 1 hertz (Hz) and less than or equal to 1 kilohertz (kHz), and the second frequency domain is a frequency domain of greater than 1 kHz and less than or equal to 1,000 kHz.

2. The positive electrode of claim 1,

wherein the $R_{ct}$ is determined based on a value obtained by performing a distribution of relaxation time (DRT) analysis on impedance information obtained by performing an electrochemical impedance spectroscopy (EIS) on the secondary battery to generate a graph of impedance based on frequency and integrating a first domain corresponding to the first frequency domain of the graph, and

the $R_s$ is determined based on a value obtained by performing the DRT analysis on impedance information obtained by performing the EIS on the secondary battery to generate the graph of impedance based on frequency and integrating a second domain corresponding to the second frequency domain of the graph.

3. The positive electrode of claim 1,
wherein the positive electrode active material comprises a first positive electrode active material and a second positive electrode active material having different average particle diameters ($D_{50}$) from each other.

4. The positive electrode of claim 1,

wherein the positive electrode active material comprises a first positive electrode active material represented by Formula 1 below, and
a second positive electrode active material represented by Formula 2 below:

[Formula 1] $\qquad Li_{1+a1}Ni_{x1}Co_{y1}Mn_{z1}Al_{w1}M^1_{v1}O_2$

wherein, in Formula 1 above,

$$0 \leq a1 \leq 0.3, \quad 0.6 \leq x1 \leq 1.0, \quad 0 \leq y1 \leq 0.2, \quad 0 \leq z1 \leq 0.2, \quad 0 \leq w1 \leq 0.2,$$

$$0 \leq v1 \leq 0.1,$$

and
$M^1$ is a doping element including at least one selected from the group consisting of W, Cu, Fe, V, Cr, Ti, Zr, Zn, In, Ta, Y, In, La, Sr, Ga, Sc, Gd, Sm, Ca, Ce, Nb, Mg, B, Ba and Mo, and

[Formula 2] $\qquad Li_{1+a2}Ni_{x2}Co_{y2}Mn_{z2}Al_{w2}M^2_{v2}O_2$

wherein, in Formula 2 above,

$$0 \leq a2 \leq 0.3, \quad 0.6 \leq x2 \leq 1.0, \quad 0 \leq y2 \leq 0.2, \quad 0 \leq z2 \leq 0.2, \quad 0 \leq w2 \leq 0.2,$$

$$0 \leq v2 \leq 0.1,$$

and

$M^2$ is a doping element including at least one selected from the group consisting of W, Cu, Fe, V, Cr, Ti, Zr, Zn, In, Ta, Y, In, La, Sr, Ga, Sc, Gd, Sm, Ca, Ce, Nb, Mg, B, Ba and Mo.

5. The positive electrode of claim 1,
wherein an average particle diameter ($D_{50}$) of the first positive electrode active material is 6 micrometers ($\mu$m) to 12 $\mu$m.

6. The positive electrode of claim 1,
wherein an average particle diameter ($D_{50}$) of the second positive electrode active material is 1.5 $\mu$m to 5 $\mu$m.

7. The positive electrode of claim 1,
wherein the first positive electrode active material and the second positive electrode active material are included in a weight ratio of 80:20 to 40:60.

8. The positive electrode of claim 1,
wherein the positive electrode active material is obtained as the positive electrode active material is mixed in distilled water, washed with water, and then dried.

9. A lithium secondary battery comprising:

a positive electrode comprising a positive electrode active material and having a resistance component ratio defined by Equation 1 below of greater than or equal to 2;
a negative electrode; and
an electrolyte,

[Equation 1]

$$R_{ct} / R_s$$

wherein, in Equation 1 above, the $R_{ct}$ refers to a charge transfer resistance of the positive electrode measured in a first frequency domain for the lithium secondary battery, and
the $R_s$ refers to a surface or interfacial resistance of the positive electrode measured in a second frequency domain for the lithium secondary battery, wherein the first frequency domain is a frequency domain of greater than or equal to 1 hertz (Hz) and less than or equal to 1 kilohertz (kHz), and the second frequency domain is a frequency domain of greater than 1 kHz and less than or equal to 1,000 kHz.

10. The lithium secondary battery of claim 9,

wherein the $R_{ct}$ is determined based on a value obtained by performing a distribution of relaxation time (DRT) analysis on impedance information obtained by performing an electrochemical impedance spectroscopy (EIS) on the lithium secondary battery to generate a graph of impedance based on frequency and integrating a first domain corresponding to the first frequency domain of the graph, and
the $R_s$ is determined based on a value obtained by performing the DRT analysis on impedance information obtained by performing the EIS on the secondary battery to generate the graph of impedance based on frequency and integrating a second domain corresponding to the second frequency domain of the graph.

11. The lithium secondary battery of claim 9,

wherein the negative electrode comprises a negative electrode current collector, and
a negative electrode active material layer comprising a negative electrode active material,
wherein the negative electrode active material comprises at least one of a silicon-based negative electrode active material and a carbon-based negative electrode active material.

12. The lithium secondary battery of claim 11,
    wherein the silicon-based negative electrode active material is included in an amount of 1 weight percentage (wt%) to 30 wt% with respect to a total weight of the negative electrode active material layer.

13. The lithium secondary battery of claim 11,

    wherein the negative electrode comprises the silicon-based negative electrode active material and the carbon-based negative electrode active material,
    wherein the silicon-based negative electrode active material and the carbon-based negative electrode active material are included in a weight ratio of 1:99 to 30:70.

14. A method of preparing a positive electrode, the method comprising:

    (A) mixing a positive electrode active material in distilled water and washing the positive electrode active material with water;
    (B) drying the washed positive electrode active material; and
    (C) applying a positive electrode slurry comprising the dried positive electrode active material onto a positive electrode current collector.

15. The method of claim 14,
    wherein the operation (A) comprises:

    (a1) mixing a first positive electrode active material in distilled water and performing a first water washing; and
    (a2) mixing a second positive electrode active material in distilled water and performing a second water washing,
    wherein the first positive electrode active material and the second positive electrode active material have different average particle diameters ($D_{50}$) from each other.

16. The method of claim 15,
    wherein the first water washing is performed at a higher temperature than the second water washing.

17. The method of claim 15,
    wherein the first water washing is performed at 20 degrees Celsius (°C) to 40 °C.

18. The method of claim 15,
    wherein the second water washing is performed at 3 °C to 18 °C.

19. The method of claim 15,
    wherein the first water washing is performed by mixing the first positive electrode active material in an amount of 50 wt% to 70 wt% with respect to a total weight of the distilled water.

20. The method of claim 15,
    wherein the second water washing is performed by mixing the second positive electrode active material in an amount of 65 wt% to 85 wt% with respect to a total weight of the distilled water.

FIG. 1

FIG. 2

FIG. 3

FIG. 4

## INTERNATIONAL SEARCH REPORT

| International application No. |
|---|
| **PCT/KR2024/019134** |

### A. CLASSIFICATION OF SUBJECT MATTER

**G01R 31/389**(2019.01)i; **G01R 31/392**(2019.01)i; **G01R 23/16**(2006.01)i; **G01R 31/367**(2019.01)i; **G01R 31/396**(2019.01)i; **H01M 4/36**(2006.01)i

According to International Patent Classification (IPC) or to both national classification and IPC

### B. FIELDS SEARCHED

Minimum documentation searched (classification system followed by classification symbols)

G01R 31/389(2019.01); C01G 53/00(2006.01); C01G 53/04(2006.01); H01M 10/052(2010.01); H01M 4/133(2010.01); H01M 4/505(2010.01); H01M 4/525(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 양극 활물질(cathode active material), 표면 저항(surface resistance), 전하 전달 저항 (charge transfer resistance), 비율(ratio), 수세(washing), 평균 입경(average particle size)

### C. DOCUMENTS CONSIDERED TO BE RELEVANT

| Category* | Citation of document, with indication, where appropriate, of the relevant passages | Relevant to claim No. |
|---|---|---|
| X | KR 10-2022-0045813 A (LG CHEM, LTD.) 13 April 2022 (2022-04-13)<br>See paragraphs [0003], [0052] and [0084]-[0085]; claim 1; and figure 2. | 14-15 |
| Y | | 16-20 |
| A | | 1-13 |
| Y | KR 10-2022-0041562 A (LG CHEM, LTD.) 01 April 2022 (2022-04-01)<br>See claims 4 and 7. | 16-17 |
| Y | KR 10-2022-0036597 A (LG CHEM, LTD.) 23 March 2022 (2022-03-23)<br>See paragraphs [0066]-[0069]; and claim 1. | 18-20 |

☑ Further documents are listed in the continuation of Box C.   ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **26 February 2025** | **26 February 2025** |

| Name and mailing address of the ISA/KR | Authorized officer |
|---|---|
| **Korean Intellectual Property Office<br>Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2024/019134** |

## C. DOCUMENTS CONSIDERED TO BE RELEVANT

| Category* | Citation of document, with indication, where appropriate, of the relevant passages | Relevant to claim No. |
| --- | --- | --- |
| A | DUAN, Xiting et al. Degradation Diagnosis of Li(Ni0.5Mn0.2Co0.3)O2/Li Half-cell by Identifying Physical Parameter Evolution Profile Using Impedance Spectra During Cycling. Journal of The Electrochemical Society. vol. 170, 040503, 13 April 2023, pp. 1-16.<br>[Retrieved on 11 February 2025]. Retrieved from <https://iopscience.iop.org/article/10.1149/1945-7111/accab3/meta>.<br>See page 3, figure 2. | 1-20 |
| A | KR 10-2022-0114249 A (SK ON CO., LTD.) 17 August 2022 (2022-08-17)<br>See paragraphs [0013]-[0014], [0044] and [0093]-[0103]; claim 1; and figure 1. | 1-20 |

Form PCT/ISA/210 (second sheet) (July 2022)

**INTERNATIONAL SEARCH REPORT**
Information on patent family members

International application No.

**PCT/KR2024/019134**

| Patent document cited in search report | | | Publication date (day/month/year) | Patent family member(s) | | | Publication date (day/month/year) |
|---|---|---|---|---|---|---|---|
| KR | 10-2022-0045813 | A | 13 April 2022 | CN | 115003634 | A | 02 September 2022 |
| | | | | CN | 115003634 | B | 02 April 2024 |
| | | | | EP | 4119503 | A1 | 18 January 2023 |
| | | | | EP | 4119503 | A4 | 22 November 2023 |
| | | | | JP | 2023-513521 | A | 31 March 2023 |
| | | | | JP | 7446448 | B2 | 08 March 2024 |
| | | | | KR | 10-2587970 | B1 | 10 October 2023 |
| | | | | US | 2023-0163273 | A1 | 25 May 2023 |
| | | | | WO | 2022-075755 | A1 | 14 April 2022 |
| KR | 10-2022-0041562 | A | 01 April 2022 | None | | | |
| KR | 10-2022-0036597 | A | 23 March 2022 | None | | | |
| KR | 10-2022-0114249 | A | 17 August 2022 | CN | 114914397 | A | 16 August 2022 |
| | | | | EP | 4040530 | A1 | 10 August 2022 |
| | | | | KR | 10-2763136 | B1 | 04 February 2025 |
| | | | | US | 2022-0263076 | A1 | 18 August 2022 |

Form PCT/ISA/210 (patent family annex) (July 2022)